# EUROPÄISCHE PATENTSCHRIFT

(11) **EP 0 970 529 B1**
(45) Veröffentlichungstag und Bekanntmachung des Hinweises auf die Patenterteilung: **28.08.2002**
(21) Anmeldenummer: 98919152.3
(22) Anmeldetag: 25.03.1998
(51) Int. Cl.: H01M 4/04, H01M 6/40, H01M 10/40, H01M 4/02

(54) **VERFAHREN ZUR HERSTELLUNG VON FORMKÖRPERN FÜR LITHIUMIONENBATTERIEN**
METHOD FOR PRODUCING SHAPED BODIES FOR LITHIUM ION BATTERIES
PROCEDE DE PRODUCTION DE CORPS MOULES POUR ACCUMULATEURS AUX IONS DE LITHIUM

(30) Priorität: 27.03.1997 DE 19713072
(43) Veröffentlichungstag der Anmeldung: 12.01.2000
(73) Patentinhaber: BASF AKTIENGESELLSCHAFT, 67056 Ludwigshafen (DE)
(72) Erfinder: BAUER, Stephan, D-67126 Hochdorf-Assenheim (DE); WEINGART, Franz, D-69181 Leimen (DE); BRONSTERT, Bernd, D-67166 Otterstadt (DE); MÖHWALD, Helmut, D-76855 Annweiler (DE); KESSLER, Thomas, D-67105 Schifferstadt (DE); BURKHARDT, Uwe, D-67468 Frankenstein (DE); HENNENBERGER, Florian, D-67117 Limburgerhof (DE)
(74) Vertreter: Isenbruck, Günter, Dr.
(86) Internationale Anmeldenummer: EP9801763
(87) Internationale Veröffentlichungsnummer: WO98044576

(56) Entgegenhaltungen:
- EP-A- 0 145 498
- GB-A- 1 078 895
- US-A- 5 230 843
- US-A- 5 348 824
- US-A- 5 514 461

## Beschreibung

Die vorliegende Erfindung betrifft ein Verfahren zur Herstellung von u.a. als Festelektrolyte, Separatoren und Elektroden für elektrochemische Zellen geeigneten Formkorpern, vorzugsweise von folienförmigen Formkörpern für elektrochemische Zellen durch Schmelzextrusion; Festelektrolyte, Separatoren, Elektroden, Sensoren, elektrochrome Fenster, Displays, Kondensatoren und ionenleitende Folien an sich, die jeweils einen derartigen Formkorper umfassen; sowie elektrochemische Zellen mit solchen Festelektrolyten, Separatoren und/oder Elektroden.

Elektrochemische, insbesondere wiederaufladbare Zellen sind allgemein bekannt, beispielsweise aus "Ullmann's Encyclopedia of Industrial Chemistry", 5. Ed., Vol. A3, VCH Verlagsgesellschaft mbH, Weinheim, 1985, Seite 343-397.

Unter diesen Zellen nehmen die Lithiumbatterien und die Lithiumionenbatterien insbesondere als Sekundärzellen aufgrund ihrer hohen spezifischen Energiespeicherdichte eine besondere Stellung ein.

Solche Zellen enthalten in der Kathode, wie u.a. in obigem Zitat aus "Ullmann" beschrieben, Lithiumionen und Mangan-, Cobalt-, Vanadium- oder Nickelionen enthaltende Mischoxide, wie sie im stöchiometrisch einfachsten Fall als LiMn₂O₄, LiCoO₂, LiV₂O₅ oder LiNiO₂ beschrieben werden können.

Mit Verbindungen, die Lithiumionen in ihr Gitter einbauen können, wie Graphit, reagieren diese Mischoxide reversibel unter Ausbau der Lithiumionen aus dem Kristallgitter, wobei in diesem die Metallionen wie Mangan-, Cobalt- oder Nickelionen oxidiert werden. Diese Reaktion läßt sich in einer elektrochemischen Zelle zur Stromspeicherung nutzen, indem man die Lithiumionen aufnehmende Verbindung, also das Anodenmaterial, und das lithiumhaltige Mischoxid, also das Kathodenmaterial, durch einen Elektrolyten trennt, durch welchen die Lithiumionen aus dem Mischoxid in das Anodenmaterial wandern (Ladevorgang).

Die zur reversiblen Speicherung von Lithiumionen geeigneten Verbindungen werden dabei ublicherweise auf Ableitelektroden mittels eines Bindemittels fixiert.

Bei der Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Mischoxid (Kathodenmaterial).

Zur Vermeidung eines Kurzschlusses innerhalb der elektrochemischen Zelle befindet sich zwischen den beiden Elektroden eine elektrisch isolierende, fur Lithiumkationen aber durchgängige Schicht, ein sogenannter Festelektrolyt oder Separator.

Festelektrolyte und Separatoren bestehen bekanntermaßen aus einem Trägermaterial, in das eine dissoziierbare, Lithiumkationen enthaltende Verbindung zur Erhöhung der Lithiumionenleitfähigkeit und üblicherweise weitere Zusatzstoffe wie Lösungsmittel inkorporiert werden.

Unter einem Festelektrolyt versteht man dabei ein Material, das entweder lösungsmittelfrei in den elektrochemischen Zellen eingesetzt werden kann, oder das im Falle der Verwendung eines Lösungsmittel dieses weitgehend physikalisch gebunden enthält.

Zur Herstellung der Festelektrolyte oder Separatoren trägt man im allgemeinen eine Lösung aus dem Trägermaterial, der Lithiumkationen enthaltenden Verbindung und gegebenenfalls weiterer Zusatzstoffe auf einen Träger auf, wonach man das Lösungsmittel abdampft.

Als Trägermaterial schlägt z.B die US 5 540 741 und die US 5 478 668 ein Copolymerisat aus Vinylidendifluorid und Hexafluorpropen vor.

Fur die Herstellung dieser Batteriefolien gemaß der obigen Druckschriften werden Feststoff, Weichmacher und Bindemittel dispergiert (siehe Tabelle).

| | **Anode** | **Kathode** | **Separator** |
|---|---|---|---|
| **Feststoff** | Graphit | LMn₂O₄ | Aerosil |
| **Weichmacher** | Dibutylphthalat | Dibutylphthalat | Dibutylphthalat |
| **Bindemittel** | COPO (PVDF/HFP) | COPO (PVDF/HFP) | COPO (PVDF/HFP) |
| **Lösungsmittel** | Aceton | Aceton | Aceton |
| **Extraktionsmittel** | Diethylether | Diethylether | Diethylether |

Die Dispersion wird anschließend vergossen, und der Film wird getrocknet. Anschließend wird der Weichmacher mit Diethylether extrahiert. Das Bindemittel ist ein statistisches Copolymer aus Vinylidenfluorid und Hexafluorpropen (8-25%).

Das dort beschriebene Verfahren weist die folgenden Nachteile auf:
1. Verwendung von organischen Lösungsmitteln
2. Film muß getrocknet werden
3. Extraktion des Weichmacher ist erforderlich
4. Extraktionsmittel ist explosibel
5. Weichmacher wird nicht zu 100% aus der Folie extrahiert.

Ferner sind Festelektrolyte auf der Basis von Polyalkylenoxiden bekannt und z.B. in der EP-A 559 317, der EP-A 576 686, der EP-A 537 930, der EP-A 585 072 und der US 5 279 910 beschrieben. Die dort beschriebenen Polyether sind an den End- bzw. funktionellen Gruppen modifiziert, z.B. durch (Meth)acryloyl-Gruppen, und werden vor der Verwendung als Festelektrolyt durch Energiezufuhr (Wärme, Licht) vernetzt. Ferner enthalten sie im allgemeinen ein Leitsalz, z.B. LiPF₆, zur Verbesserung ihrer Leitfähigkeit. Als Verfahren zur Herstellung der dort beschriebenen Systeme werden herkömmliche Gieß-, Laminier- und Preßverfahren beschrieben.

Die US 5 348 824 betrifft ein Verfahren zur Beschichtung einer positiven Elektrode einer Li-Batterie durch Schmelzextrusion eines festen polymeren Elektrolyts, der ein Polymer, wie darin definiert, und ein Li-Salz umfaßt. Die EP-B 145 498 beschreibt ebenfalls ein Verfahren zur Herstellung von für elektrochemische Zellen geeigneten Formkörpern, wobei ein Gemisch aus einem Leitsalz, einem organischen Polymer und einem Weichmacher in der Schmelze vermengt werden und aus der Schmelze eine Folie, z. B. durch Extrudieren, hergestellt wird. Die so erhaltenen Folien weisen in der Regel eine unzureichende elektrochemische Belastbarkeit auf

All diesen Verfahren ist gemein, daß sie sehr aufwendig sind und/oder zu Formkörpern führen, die bzgl. der Druckfestigkeit und/oder der thermischen Stabilität nicht zufriedenstellend sind.

Demgemäß liegt der vorliegenden Erfindung die Aufgabe zugrunde, ein verbessertes Verfahren zur Herstellung derartiger Formkörper bereitzustellen, sowie diese Formkörper an sich, die bedingt durch den Herstellungsprozeß eine besondere Mikrostruktur und verbesserte mechanische Eigenschaften aufweisen, bereitzustellen.

Bedingt durch insbesondere die Anwesenheit eines Pigments III und der hier verwendeten speziellen Verfahrensparameter, wie nachfolgend definiert, werden Formkörper erhalten, die, bei der Verwendung als Festelektrolyt, Separator oder Elektrode, verglichen mit den bislang bekannten Systemen, eine verbesserte Kurzschlußfestigkeit, eine erhöhte Druckfestigkeit, insbesondere bei erhöhten Temperaturen von oberhalb 120 °C, sowie eine größere Porosität aufweisen, und darüber hinaus in der Lage sind, die Bildung von Li-Dendriten nachhaltig zu unterdrucken Außerdem bedingt die Anwesenheit des Pigments eine verbesserte Zyklenstabilitat und eine hohere Strombelastbarkeit einer elektrochemischen Zelle Bei der Verwendung der bevorzugt eingesetzten basischen Feststoffe IIIa wird ferner die wahrend des Betriebs einer elektrochemischen Zelle gebildete Saure abgefangen bzw neutralisiert.

Die Erfindung betrifft demnach ein Verfahren zur Herstellung eines Formkorpers, vorzugsweise eines folienformigen Formkorpers, das folgende Stufe umfaßt:
I) Compoundieren und Schmelzextrudieren einer Mischung I, die ein Gemisch I umfaßt, das enthalt
   a) 1 bis 95 Gew.-% mindestens eines Pigments III mit einer Primarpartikelgroße von 5 nm bis 20 µm, das ausgewählt wird aus der Gruppe bestehend aus einem elektrochemisch inerten Feststoff IIIa, einer beim Laden zur Abgabe von Lithiumionen befähigte Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc,
   b) 5 bis 99 Gew -% mindestens eines polymeren Bindemittels IV, und
   c) 0 bis 200 Gew.-%, bezogen auf die Gesamtmenge der Komponenten a) und b), mindestens eines Weichmachers V,
wobei der Gewichtsanteil des Gemischs II an der Mischung I 1 bis 100 Gew.-% beträgt, und
wobei Mischungen I umfassend Gemische II enthaltend als polymeres Bindemittel IV ein Copolymer aus Vinylidenfluorid (VdF) und Hexafluorpropylen (HFP) mit einem Gehalt an HFP von 8 bis 25 Gew.-% und als Weichmacher V eine Verbindung, die ausgewählt wird aus der Gruppe bestehend aus Dibutylphthalat, Dimethylphthalat, Diethylphthalat, Tris(butoxyethyl)phosphat, Propylencarbonat, Ethylencarbonat, Trimethyltrimellitat und Gemischen davon, ausgeschlossen sind.

Ferner betrifft sie ein Verfahren, wie oben definiert, wobei das Pigment III ein elektrochemisch inerter Feststoff IIIa ist, der ausgewählt wird aus der Gruppe bestehend aus einem anorganischen Feststoff, vorzugsweise einem anorganischen basischen Feststoff, ausgewählt aus der Gruppe bestehend aus Oxiden, Mischoxiden, Carbonaten, Silicaten, Sulfaten, Phosphaten, Amiden, Imiden, Nitriden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid, Polyamiden, Polyimiden; einer Feststoffdispersion enthaltend ein derartiges Polymer; Glasmehl, Nanoglaspartikel, wie z.B. Monosper® (Fa. Merck), Mikroglaspartikel, wie z.B. Spheriglas® (Fa. Potters-Ballotini), Nanowhisker und einem Gemisch aus zwei oder mehr davon, wobei ein Formkörper erhalten wird, der als Festelektrolyt und/oder Separator verwendet werden kann.

Beispielhaft zu nennen sind insbesondere: Oxide, wie z.B. Siliciumdioxid, Aluminiumoxid, Magnesiumoxid oder Titandioxid, Mischoxide, beispielsweise der Elemente Silicium, Calcium, Aluminium, Magnesium, Titan; Silicate, wie z.B. Leiter-, Ketten-, Schicht- und Gerüstsilicate, wie z.B. Talk, Pyrophyllit, Muskovit, Phlogopit, Amphibole, Nesocilicate, Pyroxene, Sorosilicate, Zeolithe, Feldspäte, Glimmer, Phyllosilicate; Sulfate, wie z.B. Alkali- und Erdalkalimetallsulfate; Carbonate, beispielsweise Alkali- und Erdalkalimetallcarbonate, wie z.B. Calcium-, Magnesium oder Bariumcarbonat oder Lithium-, Kalium oder Natriumcarbonat; Phosphate, beispielsweise Apatite; Amide; Imide; Nitride; Carbide; Polymere, wie z.B. Polyethylen, Polypropylen, Polystyrol, Polytetrafluorethylen, Polyvinylidenfluorid, Polyamide, Polyimide, oder andere Thermoplasten, Duromeren oder Mikrogele, vernetzte Polymerpartikel, wie z.B. Agfaperl®, Feststoffdispersionen, insbesondere solche, die die oben genannten Polymere enthalten, sowie Gemische aus zwei oder mehr der oben genannten Feststoffe.

Weiterhin konnen als inerter Feststoff IIIa erfindungsgemäß anorganische Li-Ionen leitende Feststoffe, vorzugsweise ein anorganischer basischer Li-Ionen leitenden Feststoff eingesetzt werden.

Dabei sind zu nennen: Lithiumborate, wie z.B. Li₄B₆O₁₁ * xH₂O, Li₃(BO₂)₃, Li₂B₄O₇ * xH₂O, LiBO₂, wobei x eine Zahl von 0 bis 20 sein kann. Lithium-Aluminate, wie z.B. Li₂O * Al₂O₃ * H₂O, Li₂Al₂O₄, LiAlO₂, Lithium-Aluminosilicate, wie z.B. Lithium enthaltende Zeolithe, Feldspäte, Feldspatvertreter, Phyllo- und Inosilicate, und insbesondere LiAlSi₂O₆ (Spodumen), LiAlSi₄O₁₀ (Petullit), LiAlSiO₄ (Eukryptit), Glimmer, wie z.B. K[Li,Al]₃[AlSi]₄O₁₀(F-OH)₂, K[Li,Al,Fe]₃ [AlSi]₄O₁₀(F-OH)₂; Lithiurn-Zeolithe, insbesondere solche in Faser-, Blatt-, oder Würfel-Form, insbesondere solche mit der allgemeinen Formel Li_{2/z}O * Al₂O₃ * xSiO₂ * yH₂O wobei z der Wertigkeit entspricht, x 1,8 bis ca. 12 und y 0 bis ca. 8 ist; Lithium-Carbide, wie z.B. Li₂C₂, Li₄C; Li₃N, Lithium-Oxide und -Mischoxide, wie z.B. LiAlO₂, Li₂MnO₃, Li₂O, Li₂O₂, Li₂MnO₄, Li₂TiO₃; Li₂NH; LiNH₂, Lithiumphosphate, wie z.B. Li₃PO₄, LiPO₃, LiAlFPO₄, LiAl(OH)PO₄, LiFePO₄, LiMnPO₄, Li₂CO₃, Lithium-Silicate in Leiter-, Ketten-, Schicht-, und Gerüst-Form, wie z.B. Li₂SiO₃, Li₂SiO₄ und Li₆Si₂; Lithium-Sulfate, wie z.B. Li₂SO₄, LiHSO₄, LiKSO₄, sowie die als Feststoff IIIb genannten Li-Verbindungen, wobei bei deren Verwendung als Feststoff IIIa die Anwesenheit von Leitruß ausgeschlossen ist; sowie Gemische aus zwei oder mehr der oben genannten Li-Ionen leitenden Feststoffe.

Besonders geeignet sind dabei basische Feststoffe. Unter basischen Feststoffen sollen dabei solche verstanden werden, deren Gemisch mit einem flüssigen, Wasser enthaltenden Verdünnungsmittel, das selber einen pH-Wert von höchstens 7 aufweist, einen höheren pH-Wert als dieses Verdünnungsmittel aufweist.

Die Feststoffe sollten vorteilhaft in der als Elektrolyt verwendeten Flüssigkeit weitestgehend unlöslich sowie in dem Batteriemedium elektrochemisch inert sein.

Ferner betrifft sie ein Verfahren, wobei das Pigment III eine beim Laden zur Abgabe von Lithiumionen befähigte Verbindung IIIb ist, die ausgewählt wird aus der Gruppe bestehend aus LiCoO₂, LiNiO₂, LiNiₓCo_{y}O₂, LiNiₓCo_{y}Al_{z}O₂, mit 0<x,y,z≤1, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1, 5), LiₓFePS₂ (0<x≤1.5), LiNiₓB₁₋ₓO₂ (0 < x < 1), LiNiₓAl₁₋ₓO₂(0 < x < 1), LiNiₓMg₁₋ₓO₂ (0 < x < 1), LiNiₓCo₁₋ₓVO₄ (1 ≥ x ≥ 0), LiNiₓCo_{y}Mn_{z}O₂ (x+y+z = 1), LiFeO₂, LiCrTiO₄, LiₐM_{b}L_{c}O_{d} (1,15 ≥ a > 0; 1,3 ≥ b+c ≥ 0,8; 2,5 ≥ d ≥1,7; M = Ni, Co, Mn; L = Ti, Mn, Cu, Zn, Erdalkalimetalle), LiCu_{X}^{II}Cu_{Y}^{III}Mn_{(2-(x+y))}O₄ (2 > x+y ≥ 0), LiCrTiO₄, LiGaₓMn₂₋ₓO₄ (0,1 ≥ x ≥ 0), Polycarbonsulfide der allgemeinen Struktur: -[C(Sₓ)]ₙ-, V₂O₅, einem Gemisch aus zwei oder mehr davon, und einem Gemisch der Verbindung IIIb mit dem Feststoff IIIa, und die Mischung I zusätzlich 0,1 bis 20 Gew.-%, bezogen auf das Gemisch II, Leitruß enthält, wobei ein Formkörper erhalten wird, der insbesondere als Kathode verwendet werden kann.

Darüber hinaus betrifft sie ein Verfahren, wobei das Pigment III eine beim Laden zur Aufnahme von Lithiumionen befähigte Verbindung IIIc ist, die ausgewählt wird aus der Gruppe bestehend aus Lithium, einer Lithium enthaltenden Metallegierung, micronisiertem Kohlenstoffruß, natürlichem und synthetischem Graphit, synthetisch graphitiertem Kohlestaub, einer Kohlefaser, Titanoxid, Zinkoxid, Zinnoxid, Molybdänoxid, Wolframoxid, Titancarbonat, Molybdäncarbonat, Zinkcarbonat, LiₓM_{y}SiO_{z} (1 > x ≥ 0, 1 > y ≥ 0, z > 0), Sn₂BPO₄, konjungierten Polymeren wie z.B. Polypyrrole, Polyaniline, Polyacetylene, Polyphenylene, Lithiummetallverbindungen LiₓM, wie z.B. solche mit M = Sn, Bi, Sb, Zn, Cd, Pb und 5 ≥ x ≥ 0; Li-Sn-Cd, CdO, PbO, einem Gemisch aus zwei oder mehr davon, und einem Gemisch der Verbindung IIIc mit dem Feststoff IIIa, und die Mischung I zusätzlich bis zu 20 Gew -%. bezogen auf das Gemisch II, Leitruß enthält, wobei ein Formkorper erhalten wird, der insbesondere als Anode verwendet werden kann

Besonders geeignet sind Pigmente III, die eine Primärpartikelgröße von 5 nm bis 20 µm, vorzugsweise 0,01 bis 10 µm und insbesondere 0,1 bis 5 µm aufweisen, wobei die angegebenen Partikelgrößen durch Elektronenmikroskopie ermittelt werden Der Schmelzpunkt der Pigmente liegt vorzugsweise über der für die elektrochemische Zelle ublichen Betriebstemperatur, wobei sich Schmelzpunkte von uber 120°C, insbesondere von uber 150 °C als besonders gunstig erwiesen haben.

Dabei konnen die Pigmente bzgl ihrer außeren Form symmetrisch sein, d.h. ein Größenverhältnis Höhe : Breite . Lange (Aspektverhältnis) von ungefähr 1 aufweisen und als Kugeln, Granalien, annähernd runde Gebilde, aber auch in Form von beliebigen Polyedern, wie z.B. als Quader, Tetraeder, Hexaeder, Octaeder oder als Bipyramide vorliegen, oder verzerrt oder asymmetrisch sein, d.h. ein Größenverhältnis Höhe : Breite Lange (Aspektverhaltnis) von ungleich 1 aufweisen und z.B als Nadeln, asymmetrische Tetraeder, asymmetrische Bipyramiden, asymmetrische Hexa- oder Octaeder, Plättchen, Scheiben oder als faserförmige Gebilde vorliegen. Sofern die Feststoffe als asymmetrische Teilchen vorliegen, bezieht sich die oben angegebene Obergrenze für die Primarpartikelgröße auf die jeweils kleinste Achse.

Bei der Herstellung der als Kathode oder Anode verwendbaren Formkörper wird der Leitruß, sofern vorhanden, vorzugsweise in Form eines Master-Batch zu dem Gemisch II gegeben. Bei dem Master-Batch handelt es sich um eine Zusammensetzung, die zu 20 bis 50 Gew.-% Leitruß, 5 bis 30 Gew.-% polymeres Bindemittel IV und 30 bis 75 Gew.-% Weichmacher V enthält. Dabei wird die Menge und Zusammensetzung des Master-Batches so gewählt, daß, bezogen auf das Gemisch II die Menge des insgesamt zugegebenen Leitsalzes 20 Gew-% nicht ubersteigt. Vorzugsweise wird das Master-Batch durch Compoundieren und Schmelzextrudieren der oben genannten Komponenten hergestellt.

Die Gemische II sollen erfindungsgemäß zu 1 bis 95 Gew -%, vorzugsweise 25 bis 90 Gew.-% und insbesondere 30 bis 70 Gew -% aus einem Pigment III und zu 5 bis 99 Gew.-%, vorzugsweise 10 bis 75 Gew.-% und insbesondere 30 bis 70 Gew.-% aus einem polymeren Bindemittel IV bestehen, wobei das polymere Bindemittel vorteilhaft ein mittleres Molekulargewicht (Zahlenmittel) von 5.000 bis 100.000.000, vorzugsweise 50.000 bis 8.000.000, aufweisen sollte.

Folgende weitere Einsatzstoffe werden bei der Herstellung des Formkörpers, bzw. in der verwendeten Mischung I bzw. dem Gemisch II verwendet:

Als polymere Bindemittel IV werden thermoplastische und ionenleitende Polymere eingesetzt. Insbesondere zu nennen sind:
1) Homo-, Block- oder Copolymere IVa (Polymere IVa) erhältlich durch Polymerisation von
   b1) 5 bis 100 Gew.-% bezogen auf das Polymer IVa eines Kondensationsprodukts VI aus
      α) mindestens einer Verbindung VII, die in der Lage ist mit einer Carbonsäure oder einer Sulfonsäure oder einem Derivat oder einem Gemisch aus zwei oder mehr davon zu reagieren, und
      β) mindestens 1 Mol pro Mol der Verbindung VII einer Carbonsäure oder Sulfonsäure VIII, die mindestens eine radikalisch polymerisierbare funktionelle Gruppe aufweist, oder eines Derivats davon oder eines Gemischs aus zwei oder mehr davon
      und
   b2) 0 bis 95 Gew.-% bezogen auf das Polymer IVa einer weiteren Verbindung IX mit einem mittleren Molekulargewicht (Zahlenmittel) von mindestens 5.000 mit Polyethersegmenten in Haupt- oder Seitenkette.

   Vorzugsweise ist das Polymer IVa erhältlich durch
   b1) 5 bis 100 Gew.-% bezogen auf das Polymer IVa eines Kondensationsprodukts VI aus
      α) einem mehrwertigen Alkohol VII, welcher in der Hauptkette Kohlenstoff- und Sauerstoffatome enthält,
         und
      β) mindestens 1 Mol pro Mol des mehrwertigen Alkohols VII einer a,b-ungesättigten Carbonsäure VIII,
      und
   b2) 0 bis 95 Gew.-% bezogen auf das Polymer IVa einer weiteren Verbindung IX mit einem mittleren Molekulargewicht (Zahlenmittel) von mindestens 5000 mit Polyethersegmenten in Haupt- oder Seitenkette.

   Als Verbindung VII, die in der Lage ist mit einer Carbonsäure oder einer Sulfonsäure VIII oder einem Derivat oder einem Gemisch aus zwei oder mehr davon zu reagieren, sind prinzipiell alle Verbindung verwendbar, die dieses Kriterium erfüllen.
   Vorzugsweise wird die Verbindung VII ausgewahlt aus der Gruppe bestehend aus einem ein- oder mehrwertigen Alkohol, der in der Hauptkette ausschließlich Kohlenstoffatome aufweist; einem ein- oder mehrwertigen Alkohol, der in der Hauptkette neben mindestens zwei Kohlenstoffatomen mindestens ein Atom aufweist, das ausgewählt wird aus der Gruppe bestehend aus Sauerstoff, Phosphor und Stickstoff; einer Silicium enthaltenden Verbindung; einem mindestens eine primäre Aminogruppe aufweisenden Amin; einem mindestens eine sekundäre Aminogruppe aufweisenden Amin; einem Aminoalkohol; einem ein- oder mehrwertigen Thiol; einer Verbindung mit mindestens einer Thiol- und mindestens einer Hydroxylgruppe; und einem Gemisch aus zwei oder mehr davon.
   Unter diesen sind wiederum Verbindungen VII bevorzugt, die zwei oder mehr funktionelle Gruppen aufweisen, die mit der Carbonsäure oder Sulfonsäure reagieren können.
   Bei der Verwendung von Verbindungen VII, die als funktionelle Gruppe Aminogruppen enthalten, ist es bevorzugt, solche mit sekundären Amino-gruppen zu verwenden. sodaß nach der Kondensation/Vernetzung entweder überhaupt keine oder nur geringe Mengen an freien NH-Gruppen in der Mischung Ia vorhanden sind.
   Im einzelnen sind als bevorzugte Verbindungen zu nennen:
   ein- oder mehrwertige Alkohole, die in der Hauptkette ausschließlich Kohlenstoffatome aufweisen, mit 1 bis 20, vorzugsweise 2 bis 20 und insbesondere 2 bis 10 alkoholischen OH-Gruppen, insbesondere zwei-, drei- und vierwertige Alkohole, vorzugsweise mit 2 bis 20 Kohlenstoffatomen, wie z.B. Ethylenglycol, Propan-1,2- oder -1,3-diol, Butan-1,2- oder -1,3-diol, Buten-1,4- oder Butin-1,4-diol, Hexan-1,6-diol, Neopentylglycol, Dodecan-1,2-diol, Glycerin, Trimethylolpropan, Pentaerythrit oder Zuckeralkohole, Hydrochinon, Novolak, Bisphenol A, wobei jedoch auch, wie aus obiger Definition hervorgeht, einwertige Alkohole, wie z.B. Methanol, Ethanol, Propanol, n-, sek.- oder tert.-Butanol, usw. eingesetzt werden können; ferner können auch Polyhydroxyolefine, bevorzugt solche mit zwei endstandigen Hydroxylgruppen, wie z.B. α,ω-Dihydroxybutadien, verwendet werden;
   Polyesterpolyole, wie sie z.B aus Ullmanns *Encyklopadie der technischen Chemie*, 4 Aufl., Bd. 19, S. 62-65 bekannt sind und beispielsweise durch Umsetzung zweiwertiger Alkohole mit mehrwertigen, bevorzugt zweiwertigen Polycarbonsauren erhalten werden,
   ein- oder mehrwertige Alkohole, die in der Hauptkette neben mindestens zwei Kohlenstoffatomen mindestens ein Sauerstoffatom enthalten, vorzugsweise Polyetheralkohole, wie z.B Polymerisationsprodukte von Alkylenepoxiden, beispielsweise Isobutylenoxid, Propylenoxid, Ethylenoxid, 1,2-Epoxybutan, 1,2-Epoxypentan, 1,2-Epoxyhexan, Tetrahydrofuran, Styroloxid, wobei auch an den Endgruppen modifizierte Polyetheralkohole, wie z.B. mit NH₂-Endgruppen modifizierte Polyetheralkohole verwendet werden können; diese Alkohole besitzen vorzugsweise ein Molekulargewicht (Zahlenmittel) von 100 bis 5.000, weiter bevorzugt 200 bis 1.000, und insbesondere 300 bis 800; derartige Verbindungen sind an sich bekannt und beispielsweise unter den Marken Pluriol® oder Pluronic® (Firma BASF Aktiengesellschaft) kommerziell verfügbar;
   Alkohole, wie oben definiert, in denen ein Teil oder alle Kohlenstoffatome durch Silicium ersetzt sind, wobei hier insbesondere Polysiloxane oder Alkylenoxid/Siloxan-Copolymere oder Gemische aus Polyetheralkoholen und Polysiloxanen, wie sie beispielsweise in der EP-B 581 296 und der EP-A 525 728 beschrieben sind, verwendet werden können, wobei bzgl. des Molekulargewichts dieser Alkohole ebenfalls das oben Gesagte gilt;
      Alkohole, wie oben definiert, insbesondere Polyetheralkohole, bei denen ein Teil oder alle Sauerstoffatome durch Schwefelatome ersetzt sind, wobei bzgl. des Molekulargewichts dieser Alkohole ebenfalls das oben Gesagte gilt;
      ein- oder mehrwertige Alkohole, die in der Hauptkette neben mindestens zwei Kohlenstoffatomen mindestens ein Phosphoratom oder mindestens ein Stickstoffatom enthalten, wie z.B. Diethanolamin, Triethanolamin;
      Lactone, die sich von Verbindungen der allgemeinen Formel HO-(CH₂)_{z}-COOH ableiten, wobei z eine Zahl von 1 bis 20 ist, wie z.B. e-Caprolacton, b-Propiolacton, g-Butyrolacton oder Methyl-e-caprolacton;
      eine Silicium enthaltende Verbindung, wie z.B. Di- oder Trichlorsilan, Phenyltrichlorsilan, Diphenyldichlorsilan, Dimethylvinylchlorsilan;
      Silanole, wie z.B. Trimethylsilanol;
      ein mindestens eine primäre und/oder sekundäre Aminogruppe aufweisendes Amin, wie z.B. Butylamin, 2-Ethylhexylamin, Ethylendiamin, Hexamethylendiamin, Diethylentriamin, Tetraethylenpentamin, Pentaethylenhexamin, Anilin, Phenylendiamin;
      Polyetherdiamine, wie z.B. 4,7-Dioxydecan-1,10-diamin, 4,11-Dioxytetradecan-1,14-diamin;
      ein ein- oder mehrwertiges Thiol, wie z.B. aliphatische Thiole, wie z.B. Methanthiol, Ethanthiol, Cyclohexanthiol, Dodecanthiol, aromatische Thiole, wie z.B. Thiophenol, 4-Chlorthiophenol, 2-Mercaptoanilin;
      eine Verbindung mit mindestens einer Thiol- und mindestens einer Hydroxylgruppe, wie z.B. 4-Hydroxythiophenol sowie Monothioderivate der oben definierten mehrwertigen Alkohole;
      Aminoalkohole, wie z.B. Ethanolamin, N-Methyl-ethanolamin, N-Ethylethanolamin, N-Butyl-ethanolamin, 2-Amino-1-propanol, 2-Amino-1-phenylethanol;
      Mono- oder Polyaminopolyole mit mehr als zwei aliphatisch gebundenen Hydroxylgruppen, wie z.B. Tris(hydroxymethyl)-methylamin, Glucamin, N,N'-Bis-(2-hydroxyethyl)-ethylendiamin, sowie deren Gemische.

   Es können auch Gemische aus zwei oder mehr der oben beschriebenen Verbindungen VII eingesetzt werden.
   Die oben erwahnten Verbindungen VII werden erfindungsgemaß mit einer Carbonsaure oder Sulfonsaure VIII, die mindestens eine radikalisch polymerisierbare funktionelle Gruppe aufweist, oder einem Derivat davon oder einem Gemisch aus zwei oder mehr davon kondensiert, wobei mindestens eine, vorzugsweise alle der freien zur Kondensation befähigten Gruppen innerhalb der Verbindungen VII mit der Verbindung VIII kondensiert werden.
   Als Carbonsäure oder Sulfonsaure VIII können im Rahmen der vorliegenden Erfindung prinzipiell alle Carbon- und Sulfonsäuren, die mindestens eine radikalisch polymerisierbare funktionelle Gruppe aufweisen, sowie deren Derivate eingesetzt werden. Dabei umfaßt der hier verwendete Begriff "Derivate" sowohl Verbindungen, die sich von einer Carbon- oder Sulfonsaure ableiten, die an der Säurefunktion modifiziert ist, wie z.B. Ester, Säurehalogenide oder Säureanhydride, als auch Verbindungen, die sich von einer Carbon- oder Sulfonsaure ableiten, die am Kohlenstoffgerüst der Carbon- oder Sulfonsaure modifiziert ist, wie z.B. Halogencarbon- oder -sulfonsäuren.
   Als Verbindung VIII sind dabei insbesondere zu nennen:
   α,β-ungesattigte Carbonsäuren oder β,γ-ungesättigte Carbonsauren oder deren Derivate.
   Besonders geeignete α,β-ungesättigte Carbonsäuren sind dabei solche der Formel 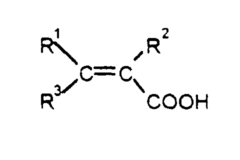 in der R¹, R² und R³ Wasserstoff oder C₁- bis C₄-Alkylreste darstellen, wobei unter diesen wiederum Acrylsäure und Methacrylsäure bevorzugt sind; weiterhin gut einsetzbar sind Zimtsäure, Maleinsäure, Fumarsäure, Itaconsäure, oder p-Vinylbenzoesäure, sowie Derivate davon, wie z B Anhydride, wie z.B. Maleinsaure- oder Itaconsäureanhydrid;
   Halogenide, insbesondere Chloride, wie z.B Acryl- oder Methacrylsäurechlorid; Ester, wie z.B. (Cyclo)alkyl(meth)acrylate mit bis zu 20 C-Atomen im Alkylrest, wie z.B. Methyl-, Ethyl-, Propyl-, Butyl-, Hexyl-, 2-Ethylhexyl-, Stearyl-, Lauryl-, Cyclohexyl-, Benzyl-, Trifluormethyl-, Hexafluorpropyl-, Tetrafluorpropyl(meth)acrylat, Polypropylenglycolmono(meth)acrylate, Polyethylenmono(meth)acrylate, Poly(meth)acrylate von mehrwertigen Alkoholen, wie z.B Glycerindi(meth)acrylat, Trimethylolpropan-di(meth)acrylat, Pentaerythrit-dioder -tri(meth)acrylat, Diethylenglycolbis(mono-(2-acryloxy)ethyl)carbonat, Poly(meth)acrylate von Alkoholen, die selbst wiederum eine radikalisch polymerisierbare Gruppe aufweisen, wie z.B. Ester aus (Meth)acrylsäure und Vinyl- und/oder Allylalkohol;
   Vinylester anderer aliphatischer oder aromatischer Carbonsauren, wie z.B Vinylacetat, Vinylpropionat, Vinylbutanat, Vinylhexanoat, Vinyloctanoat, Vinyldecanoat, Vinylstearat, Vinylpalmitat, Vinylcrotonat, Divinyladipat, Divinylsebacat, 2-Vinyl-2-ethylhexanoat, Vinyltrifluoracetat;
   Allylester anderer aliphatischer oder aromatischer Carbonsäuren, wie z.B. Allylacetat, Allylpropionat, Allylbutanat, Allylhexanoat, Allyloctanoat, Allyldecanoat, Allylstearat, Allylpalmitat, Allylcrotonat, Allylsalicylat, Allyllactat, Diallyloxalat, Allylstearat, Allylsuccinat, Diallylglutarat, Diallyladipat, Diallylpimelat, Diallylcinnamat, Diallylmaleat, Diallylphthalat, Diallylisophthalat, Triallylbenzol-1,3,5-tricarboxylat, Allylfluoracetat, Allylperfluorbutyrat, Allylperfluoroctanoat;
   β,γ-ungesattigte Carbonsäuren und deren Derivate, wie z.B. Vinylessigsäure, 2-Methylvinylessigsäure, Isobutyl-3-butenoat, Allyl-3-butenoat, Allyl-2-hydroxy-3-butenoat, Diketen;
   Sulsonsauren, wie z.B Vinylsulfonsaure, Allyl- und Methallylsulfonsaure, sowie deren Ester und Halogenide, Benzolsulfonsaurevinylester. 4-Vinylbenzolsulfonsaureamid
   Es können auch Gemische aus zwei oder mehr der oben beschriebenen Carbonund/oder Sulfonsäuren eingesetzt werden;
   Das Polymer IVa kann durch Umsetzung von 5 bis 100 Gew.-%, vorzugsweise 30 bis 70 Gew.-% bezogen auf das Polymer IVa eines Kondensationsprodukts VI und 0 bis 95 Gew.-%, insbesondere 30 bis 70 Gew.-% bezogen auf das Polymer IVa einer Verbindung IX, erhalten werden.
2) Homo-, Block- oder Copolymere IVb (Polymere IVb), erhältlich durch Polymerisation von
   b1) 5 bis 75 Gew.-%, bezogen auf das Polymer IVb einer zur radikalischen Polymerisation befähigten ungesättigten Verbindung X, die verschieden von der obigen Carbonsäure oder der Sulfonsäure VIII oder einem Derivat davon ist, oder eines Gemischs aus zwei oder mehr davon
      und
   b2) 25 bis 95 Gew.-%, bezogen auf das Polymer IVb einer weiteren Verbindung IX mit einem mittleren Molekulargewicht (Zahlenmittel) von mindestens 5.000 mit Polyethersegmenten in Haupt- oder Seitenkette, als polymeres Bindemittel verwendet.

   Als zur Herstellung des Polymers IVb verwendbare zur radikalischen Polymerisation befähigte Verbindung X sind im einzelnen folgende zu nennen:
   Olefinische Kohlenwasserstoffe, wie z.B. Ethylen, Propylen, Butylen, Isobuten, Hexen oder höhere Homologen und Vinylcyclohexan;
   (Meth)acrylnitril;
   halogenhaltige olefinische Verbindungen, wie z.B Vinylidenfluorid, Vinylidenchlorid, Vinylfluorid, Vinylchlorid, Hexafluorpropen, Trifluorpropen, 1,2-Dichlorethylen, 1,2-Difluorethylen und Tetrafluorethylen;
   Vinylalkohol, Vinylacetat, N-Vinylpyrrolidon, N-Vinylimidazol, Vinylformamid;
   Phosphornitridchloride, wie z.B. Phosphordichloridnitrid, Hexachlor(triphosphazen), sowie deren durch Alkoxy-, Phenoxy-, Amino- und Fluoralkoxy-Gruppen teilweise oder vollstandig substituierte Derivate, d.h. Verbindungen, die zu Polyphosphazenen polymerisiert werden können;
   aromatische, olefinische Verbindungen, wie z.B. Styrol, a-Methylstyrol;
   Vinylether, wie z.B. Methyl-, Ethyl-, Propyl-, Isopropyl-, Butyl-, Isobutyl-, Hexyl-, Octyl-, Decyl-, Dodecyl-, 2-Ethylhexyl-, Cyclohexyl-, Benzyl-, Trifluormethyl-, Hexafluorpropyl- Tetrafluorpropylvinylether.

   Es können selbstverständlich auch Gemische der obigen Verbindungen X eingesetzt werden, wobei dann Copolymere entstehen, die je nach Herstellungsart die Monomeren statistisch verteilt enthalten, oder Blockcopolymere ergeben.
   Diese Verbindungen X wie auch die Kondensationsprodukte VI werden nach herkömmlicher, dem Fachmann wohl bekannter Art polymerisiert, vorzugsweise radikalisch polymerisiert, wobei bezüglich der erhaltenen Molekulargewichte das hierin nachstehend bezüglich der Verbindung IX Gesagte gilt.
   Als Verbindung IX kommen in erster Linie Verbindungen mit einem mittleren Molekulargewicht (Zahlenmittel) von mindestens 5.000, vorzugsweise 5.000 bis 20.000.000, insbesondere 100.000 bis 6.000.000, in Betracht, die in der Lage sind, Lithiumkationen zu solvatisieren und als Bindemittel zu fungieren. Geeignete Verbindungen IX sind beispielsweise Polyether und Copolymere, die mindestens 30 Gew.-% der folgenden Struktureinheit, bezogen auf das Gesamtgewicht der Verbindung IX, aufweist: 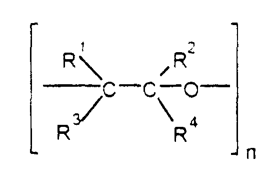 wobei R¹, R², R³ und R⁴ Arylgruppen, Alkylgruppen, vorzugsweise Methylgruppen, oder Wasserstoff darstellen, gleich oder unterschiedlich sein und Heteroatome wie Sauerstoff, Stickstoff, Schwefel oder Silicium enthalten können.
   Solche Verbindungen sind beispielsweise in: M. B. Armand et. al., Fast Ion Transport in Solids, Elsevier, New York, 1979, S. 131-136, oder in FR-A 7832976 beschrieben.
   Die Verbindung IX kann auch aus Gemischen solcher Verbindungen bestehen.
   Das Polymer IVb kann durch Umsetzung von 5 bis 75 Gew.-%, vorzugsweise 30 bis 70 Gew -% bezogen auf das Polymer IVb einer Verbindung X und 25 bis 95 Gew.-%, insbesondere 30 bis 70 Gew -% bezogen auf das Polymer IVb einer Verbindung IX, erhalten werden;
3) Polycarbonate, wie z.B. Polyethylencarbonat, Polypropylencarbonat, Polybutadiencarbonat, Polyvinylidencarbonat.
4) Homo-, Block- und Copolymere, hergestellt aus
   a) olefinischen Kohlenwasserstoffen, wie z.B. Ethylen, Propylen, Butylen, Isobuten, Propen, Hexen oder höhere Homologen, Butadien, Cyclopenten, Cyclohexen, Norbornen, Vinylcyclohexan, 1,3-Pentadien, 1,3-, 1,4-, 1,5-Hexadien, Isopren, Vinylnorbonen;
   b) aromatische Kohlenwasserstoffe wie z.B Styrol und Methylstyrol,
   c) Acrylsaure oder Methacrylsäureester, wie Methyl-, Ethyl-, Propyl-, Isopropyl-, Butyl-, Isobutyl-, Hexyl-, Octyl-, Decyl-, Dodecyl-, 2-Ethylhexyl, Cyclohexyl-, Benzyl-, Trifluoromethyl-, Hexafluoropropyl-, Tetrafluoropropylacrylat bzw. -methacrylat;
   d) Acrylnitril, Methacrylnitril, N-Methylpyrrolidon, N-Vinylimidazol, Vinylacetat;
   e) Vinylether, wie z.B. Methyl-, Ethyl-, Propyl-, Isopropyl-, Butyl-, Isobutyl-, Hexyl-, Octyl-, Decyl-, Dodecyl-, 2-Ethylhexyl, Cyclohexyl, Benzyl-, Trifluoromethyl-, Hexafluoropropyl-, Tetrafluoropropyl-vinylether;
   f) halogenhaltigen olefinischen Verbindungen wie Vinylchlorid, Vinylfluorid, Vinylidenfluorid, Vinylidenchlorid, Hexafluoropropen, Trifluoropropen, 1,2-Dichloroethen, 1,2-Difluoroethen, Tetrafluoroethen;
   g) 2-Vinylpyridin, 4-Vinylpyridin, Vinylencarbonat.

   Bei der Herstellung der oben genannten Polymere können, falls dies nötig und/oder erwünscht ist, Regler, wie z.B. Mercaptane eingesetzt werden.
5) Polyurethane, beispielsweise erhältlich durch Umsetzung von
   a) organischen Düsocyanaten mit 6 bis 30 C-Atomen wie z.B. aliphatische nichtcyclische Diisocyanate, wie z.B. 1,5-Hexamethylendiisocyanat und 1,6-Hexamethylendiisocyanat, aliphatische cyclische Diisocyanate, wie z.B. 1,4-Cyclohexylendiisocyanat, Dicyclohexylmethandiisocyanat und Isophorondiisocyanat oder aromatische Diisocyanate, wie z.B. Toluylen-2,4-diisocyanat, Toluylen-2,6-diisocyanat, m-Tetramethylxyloldiisocyanat, p-Tetramethylxyloldiisocyanat, 1,5-Tetrahydronaphthylendiisocyanat und 4,4'-Diphenylenmethandiisocyanat oder Gemische solcher Verbindungen,
      mit
   b) mehrwertigen Alkoholen, wie z.B Polyesterole, Polyetherole und Diole.

   Die Polyesterole sind zweckmäßigerweise überwiegend lineare Polymere mit endständigen OH-Gruppen, bevorzugt solche mit zwei oder drei, insbesondere zwei OH-Endgruppen. Die Säurezahl der Polyesterole ist kleiner als 10 und vorzugsweise kleiner als 3 Die Polyesterole lassen sich in einfacher Weise durch Veresterung von aliphatischen oder aromatischen Dicarbonsäuren mit 4 bis 15 C-Atomen, vorzugsweise 4 bis 6 C-Atomen, mit Glycolen, bevorzugt Glycolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure und Bernsteinsäure einsetzen. Geeignete aromatische Dicarbonsäuren sind Terephthalsäure, Isophthalsäure, Phthalsäure oder Gemische aus diesen Dicarbonsauren mit anderen Dicarbonsäuren, z.B. Diphensäure, Sebacinsäure, Bernsteinsäure und Adipinsaure. Die Dicarbonsäuren konnen einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Beispiele für geeignete Glycole sind Diethylenglycol, 1,5-Pentandiol, 1,10-Decandiol und 2,2,4-Trimethylpentandiol-1,5. Vorzugsweise verwendet werden 1,2-Ethandiol, 1,3-Propandiol, 2-Methyl-1,3-propandiol, 1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A). Je nach den gewünschten Eigenschaften der Polyurethane können die Polyole alleine oder als Gemisch in verschiedenen Mengenverhältnissen verwendet werden. Als Lactone für die Herstellung der Polyesterole eignen sich z.B. α,α-Dimethyl-β-propiolacton, γ-Butyrolacton und vorzugsweise ε-Caprolacton.
   Die Polyetherole sind im wesentlichen lineare, endständige Hydroxylgruppen aufweisende Substanzen, die Etherbindungen enthalten. Geeignete Polyetherole können leicht durch Polymerisation von cyclischen Ethern, wie Tetrahydrofuran, oder durch Umsetzung von einem oder mehreren Alkylenoxiden mit 2 bis 4 C-Atomen im Alkylenrest mit einem Startermolekül, das zwei aktive Wasserstoffatome im Alkylenrest gebunden enthält, hergestellt werden. Als Alkylenoxide seien beispielsweise Ethylenoxid, 1,2-Propylenoxid, Epichlorhydrin, 1,2-Butylenoxid, 2,3-Butylenoxid genannt. Die Alkylenoxide können einzeln, alternierend nacheinander oder als Mischung verwendet werden. Als Startermolekül kommen beispielsweise Wasser, Glycole wie Ethylenglycol, Propylenglycol, 1,4-Butandiol und 1,6-Hexandiol, Amine wie Ethylendiamin, Hexamethylendiamin und 4,4'-Diamino-diphenylmethan und Aminoalkohole wie Ethanolamin in Betracht. Geeignete Polyesterole und Polyetherole sowie deren Herstellung sind beispielsweise in EP-B 416 386, geeignete Polycarbonatdiole, vorzugsweise solche auf 1,6-Hexandiol-Basis, sowie deren Herstellung beispielsweise in US-A 4 131 731 beschrieben.
   In Mengen bis zu 30 Gew.-% bezogen auf Gesamtmasse der Alkohole können vorteilhaft aliphatische Diole mit 2 bis 20, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2,2-Dimethyl-1,3-propandiol, 2-Methyl-2-butyl-1,3-propandiol, 2,2-Dimethyl-1,4-butandiol, 1,4-Dimethylolcyclohexan, Hydroxypivalinsäureneopentylglycolester, Diethylenglycol, Triethylenglycol und Methyldiethanolamin oder aromatisch-aliphatische oder aromatisch-cycloaliphatische Diole mit 8 bis 30 C-Atomen, wobei als aromatische Strukturen heterocyclische Ringsysteme oder vorzugsweise isocyclische Ringsysteme wie Naphthalin- oder insbesondere Benzolderivate wie Bisphenol A, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate sowie Mischungen solcher Verbindungen in Betracht kommen.
   In Mengen bis zu 5 Gew.-%, bezogen auf Gesamtmasse der Alkohole, konnen vorteilhaft aliphatische Triole mit 3 bis 15, vorzugsweise 3 bis 10 C-Atomen, wie Trimethylolpropan oder Glycerin, das Reaktionsprodukt solcher Verbindungen mit Ethylenoxid und/oder Propylenoxid sowie Mischungen solcher Verbindungen in Betracht kommen.
   Die mehrwertigen Alkohole können funktionelle Gruppen, beispielsweise neutrale Gruppen wie Siloxangruppen, basische Gruppen wie insbesondere tertiäre Aminogruppen oder saure Gruppen oder deren Salze oder Gruppen, die leicht in saure Gruppen übergehen, tragen, die über einen mehrwertigen Alkohol eingeführt werden. Vorzugsweise kann man Diolkomponenten, die solche Gruppen tragen, wie N-Methyldiethanolamin, N,N-Bis(hydroxyethyl)aminomethylphosphonsäurediethylester oder N,N-Bis(hydroxyethyl)-2-aminoessigsäure-(3-sulfopropyl)-ester oder Dicarbonsäuren, die solche Gruppen tragen und für die Herstellung von Polyesterolen verwendet werden können, wie 5-Sulfoisophthalsaure, verwenden.
   Saure Gruppen sind besonders die Phosphorsäure-, Phosphonsäure-, Schwefelsäure-, Sulfonsäure-, Carboxyl-, oder Ammoniumgruppe.
   Gruppen, die leicht in saure Gruppen übergehen, sind beispielsweise die Estergruppe oder Salze, vorzugsweise der Alkalimetalle wie Lithium, Natrium oder Kalium.
6) Die oben beschriebenen Polyesterole an sich, wobei dabei zu beachten ist, daß man Molekulargewichte im Bereich von 10.000 bis 2.000.000, vorzugsweise 50.000 bis 1.000.000 erhält.
7) Polyamine, Polysiloxane und Polyphosphazene, insbesondere solche, wie sich bei der Beschreibung des Polymers IVb bereits diskutiert wurden.
8) Polyetherole, wie sie z B bei der obigen Diskussion des Polymers IVa als Verbindung IX oder bei der Diskussion der Polyurethane beschrieben wurden.

Als Weichmacher V können aprotische Losungsmittel, vorzugsweise solche, die Li-Ionen solvatisieren, wie z.B. Dimethylcarbonat. Ethyl-methyl-carbonat, Diethylcarbonat, Dipropylcarbonat, Diisopropylcarbonat, Dibutylcarbonat, Propylencarbonat; cyclische Carbonate der Summenformel CₙHₙ₊₁O_{y}, n = 2 bis 30, m = 3 bis 7, wie z.B. Ethylencarbonat, 1,2-Propylencarbonat, 1,3-Propylencarbonat, 1,2-Butylencarbonat, 1,3-Butylencarbonat, 1,4-Butylencarbonat, 2,3-Butylencarbonat; Oligoakylenoxide, wie z.B. Dibutylether, Di-tert.-butylether, Dipentylether, Dihexylether, Diheptylether, Dioctylether, Dinonylether, Didecylether, Didodecylether, Ethylenglycoldimethylether, Ethylenglycoldiethylether, 1-tert.-Butoxy-2-methoxyethan, 1-tert.-Butoxy-2-ethoxyethan, 1,2-Dimethoxypropan, 2-Methoxyethylether, 2-Ethoxyethylether, Diethylenglycoldibutylether, Dimethylenglycol-tert.-butylmethylether, Triethylenglycoldimethylether, Tetraethylenglycoldimethylether, γ-Butyrolacton, Dimethylformamid; Dimethyl-γ-butyrolacton, Diethyl-γ-butyrolacton, γ-Valerolacton, 4,5-Dimethyl-1,3-dioxolan-2-on, 4,4-Dimethyl-1,3-dioxolan-2-on, 4-Ethyl-1,3-dioxolan-2-on, 4-Methyl-5-ethyl-1,3-dioxolan-2-on, 4,5-Diethyl-1,3-dioxolan-2-on, 4,4-Diethyl-1,3-dioxolan-2-on, 1,3-Dioxan-2-on, 4-Methyl-1,3-dioxan-2-on, 5-Methyl-1,3-dioxan-2-on, 4,4-Dimethyl-1,3-dioxan-2-on, 5,5-Dimethyl-1,3-dioxan-2-on, 4,6-Dimethyl-1,3-dioxan-2-on, 4,4,6-Trimethyl-1,3-dioxan-2-on, 5,5-Diethyl-1,3-dioxan-2-on, spiro-(1,3-Oxa-2-cyclohexanon)-5',5',1',3'-oxacyclohexan; 4-Dimethylethoxysilyl-1,2-butylencarbonat; Dicarbonsäureester der Formel R¹OCOOR²OCOOR³ (R1, R2, R3 = C₁-C₂₀-Kohlenwasserstoffe), organische Ester der Formel R¹-COOR² (R¹ und R² = C₁-C₂₀-Kohlenwasserstoffe), Kohlenwasserstoffe der allgemeinen Formel CₙH₂ₙ₊₂ mit 7 < n < 50; organische Phosphorverbindungen, insbesondere Phosphate und Phosphonate, wie z.B. Trimethylphosphat, Triethylphosphat, Tripropylphosphat, Tributylphosphat, Triisobutylphosphat, Tripentylphosphat, Trihexylphosphat, Trioctylphosphat, Tris(2-ethylhexyl)phosphat, Tridecylphosphat, Diethyl-n-butylphosphat, Tris(butoxyethyl)phosphat, Tris(2-methoxyethyl)phosphat, Tris(tetrahydrofuryl)phosphat, Tris(1H,1H,5H-octafluorpentyl)phosphat, Tris(1H,1H-trifluorethyl)phosphat, Tris(2-(diethylamino)ethyl)phosphat, Tris-(methoxyethoxyethyl)phosphat, Tris(methoxyethoxy)trifluorophosphazen, Tris(ethoxycarbonyloxyethyl)phosphat, Diethylethylphosphonat, Dipropylpropylphosphonat, Dibutylbutylphosphonat, Dihexylhexylphosphonat, Dioctyloctylphosphonat, Ethyldimethylphosphonoacetat, Methyldiethylphosphonoacetat, Triethylphosphonoacetat, Dimethyl(2-oxopropyl)phosphonat, Diethyl(2-oxopropyl)phosphonat, Dipropyl(2-oxopropyl)phosphonat, Ethyldiethoxyphosphinylformiat, Trimethylphosphonoacetat, Triethylphosphonoacetat, Tripropylphosphonoacetat, Tributylphosphonoacetat; organische Schwefelverbindungen, wie z.B. Sulfate, Sulfonate, Sulfoxide, Sulfone und Sulfite, wie z.B. Dimethylsulfit, Diethylsulfit, Glycolsulfit, Dimethylsulfon, Diethylsulfon, Diethylpropylsulfon, Dibutylsulfon, Tetramethylensulfon, Methylsulfolan, Dimethylsulfoxid, Diethylsulfoxid, Dipropylsulfoxid, Dibutylsulfoxid, Tetramethylensulfoxid, Ethylmethansulfonat, 1,4-Butandiolbis(methansulfonat), Diethylsulfat, Dipropylsulfat, Dibutylsulfat, Dihexylsulfat, Dioctylsulfat, SO₂ClF;
Nitrile, wie z.B Acrylnitril;
Dispergatoren, insbesondere mit Tensidstruktur;
sowie deren Gemische
verwendet werden.

Daruberhinaus konnen ganz allgemein geeignete organische Verbindungen, wie z.B Alkane CₙHₓF_{y} mit n = 5 bis 30, x+y = 2n+2, Ether CₙHₓF_{y}O_{z} mit n = 5 bis 30, x+y = 2n+2, z = 1 bis 14; Ketone CₙHₓF_{y}O mit n = 5 bis 30, x+y = 2n; Ester CₙHₓF_{y}O₂ mit n = 5 bis 30, x+y = 2n; Carbonate CₙHₓF_{y}O₃ mit n = 5 bis 30, x+y = 2n; Lactone CₙHₓF_{y}O₂ mit n = 5 bis 20, x+y = 2n-2; cyclische Carbonate CₙHₓF_{y}O₃ mit n = 5 bis 20, x+y = 2n-2; und Borsäureester mit
- R₁-R₄ =: C₁-C₁₀-Kohlenwassestoffe und
- X =: C₁-C₁₀-Kohlenwassestoffe, Si(CH₃)₂
- m =: 1,2 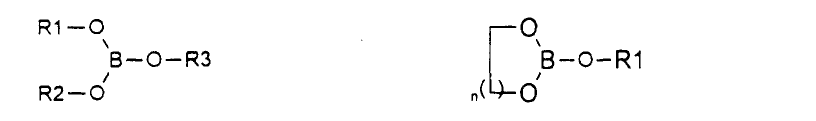 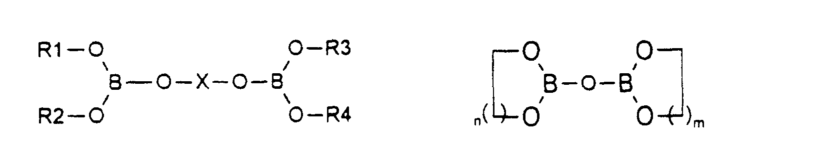 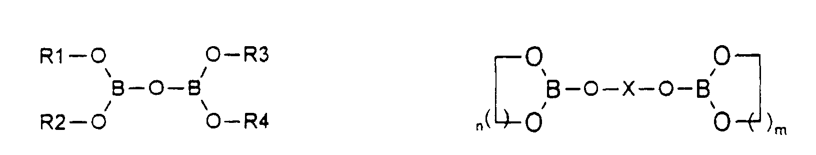
insbesondere Trimethylborat, Triethylborat, Tripropylborat, Tributylborat, Trimethylenborat, 2-Methyl-1,3,2-dioxaborinan, 2-Ethyl-1,3,2-dioxaborinan, 2-Propyl-1,3,2-dioxaborinan, 2-Butyl-1,3,2-dioxaborinan, 2-Phenyl-1,3,2-dioxaborinan als Weichmacher V eingesetzt werden.

Ferner können mindestens ein Ester der Formeln (E1) bis (E5), wie nachstehend dargestellt als Weichmacher (V) verwendet werden: 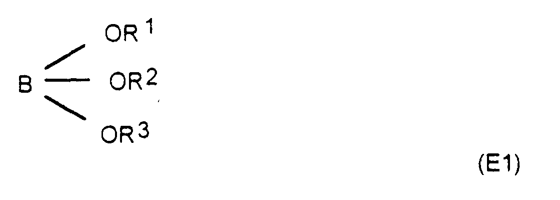 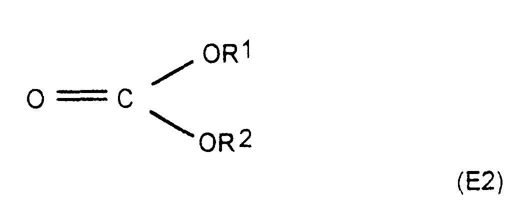 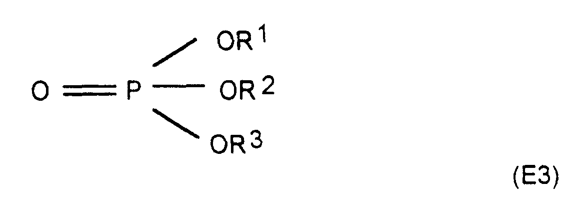 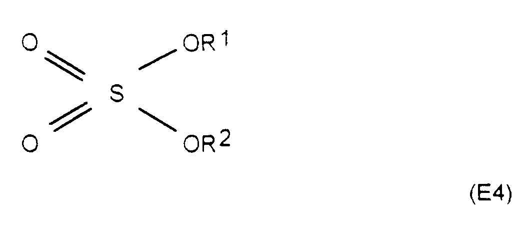 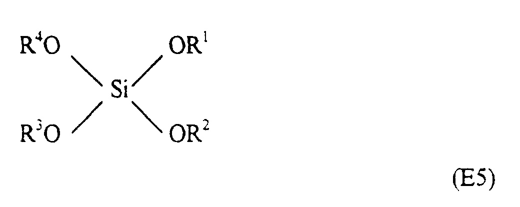 wobei R¹, R², R³, R⁴ gleich oder verschieden sind und jeweils unabhängig voneinander eine lineare oder verzweigkettige C₁- bis C₄-Alkylgruppe, (-CH₂-CH₂-O)ₙ-CH₃ mit n=1 bis 3, eine C₃- bis C₆-Cycloalkylgruppe, eine aromatische Kohlenwasserstoffgruppe, die wiederum substituiert sein kann, ist, mit der Maßgabe, daß mindestens eine der Gruppen R¹, R², R³ und R⁴ (-CH₂-CH₂-O)ₙ-CH₃ mit n=1 bis 3 ist.

Unter den obengenannten Estern der Formeln (E1) bis (E5) werden die Phosphorsäureester der Formel (E3) bevorzugt eingesetzt.

Beispiele für die Gruppen R¹, R² und - sofern vorhanden - R³ und/oder R⁴ sind die Methyl-, Ethyl-, n- und iso-Propyl-, n- und tert.-Butyl-, Cyclopentyl-, Cyclohexylsowie die Benzyl-Gruppe, sowie (-CH₂-CH₂-O)ₙ-CH₃ mit n=1 bis 3,wobei jedoch, wie bereits oben erwähnt, zu beachten ist, daß mindestens eine der Gruppen R¹, R², R³ und R⁴ (CH₂-CH₂-O)ₙ-CH₃ mit n=1 bis 3, vorzugsweise 1 oder 2, ist.

Weiter bevorzugt werden Ester der allgemeinen Formeln (E1) bis (E5) eingesetzt, in denen R¹, R² und - sofern vorhanden - R³ und/oder R⁴ gleich sind und -CH₂-CH₂O-CH₃ oder (-CH₂-CH₂-O)₂-CH₃ bedeuten, wobei auch hier wiederum die entsprechenden Phosphorsäureester bevorzugt sind.

Beispiele für besonders bevorzugt verwendete Verbindungen stellen die Verbindungen der Formeln (E1a) bis (E5a) dar: 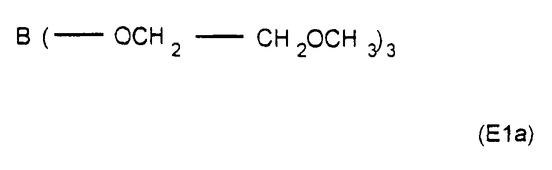 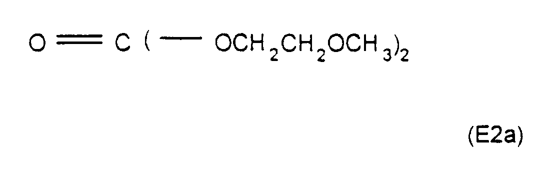 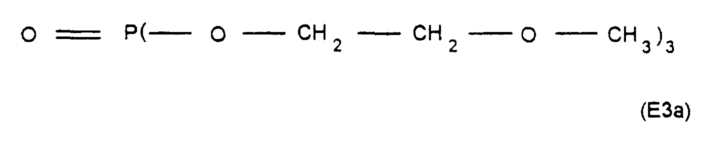 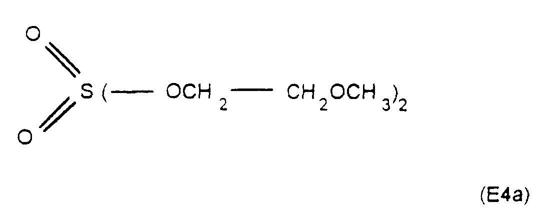 und

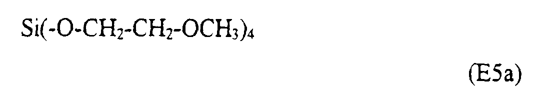

Die hierin verwendeten Ester sind bezüglich ihrer Eigenschaften außerordentlich gut als Weichmacher in den Folien geeignet und weisen im allgemeinen eine Viskosität bei Raumtemperatur von ≤ 10 mPas, vorzugsweise ≤ 5 mPas und insbesondere ≤ 3 mPas auf Sie besitzen Siedepunkte von im allgemeinen ungefähr 200°C oder höher, vorzugsweise ungefähr 250 °C oder höher und insbesondere ungefähr 300 °C oder höher, jeweils gemessen bei Atmosphärendruck auf und weisen bei den bei ihrer Verwendung auftretenden Temperaturen von ca. -50°C bis ca. 150°C einen ausreichend niedrigen Dampfdruck, von ungefähr 10⁻⁵ bis ungefähr 10⁰ auf. Bedingt durch ihre Siedepunkte sind sie destillierbar und können somit bei ihrer Herstellung in hoher Reinheit erhalten werden. Darüber hinaus sind diese Ester über einen weiten Temperaturbereich hinweg bei Atmosphärendruck flüssig, wobei sie im allgemeinen bis zu einer Temperatur von ungefähr -30 °C, vorzugsweise bis zu ungefähr -40 °C, noch flüssig sind. Die hier beschriebenen Ester können als Lösungsmittel in Elektrolytsystemen für Li-Ionen-Akkus bei mindestens ungefähr 80 °C, vorzugsweise bei mindestens ungefähr 120 °C, weiter bevorzugt bei mindestens ungefähr 150°C eingesetzt werden.

Selbstverstandlich konnen die erfindungsgemaß verwendeten Ester auch als Gemisch mit den vorstehend erwahnten Weichmachern eingesetzt werden.

Bevorzugt sind Losungsmittelkombinationen, die eine ausreichend geringe Viskosität besitzen, in der Lage sind, die Ionen der Leitsalze stark zu solvatisieren, über einen weiten Temperaturbereich hinweg flüssig sind und in ausreichender Weise elektrochemisch und chemisch stabil sowie hydrolysebeständig sind.

Die erfindungsgemäß verwendeten Ester werden nach herkömmlichen Verfahren, wie sie beispielsweise in K. Mura Kami in Chem. High Polymers (Japan), 7, S. 188-193 (1950) und in H. Steinberg Organoboron Chemistry, Kapitel 5, J Wiley&Sons, N.Y. 1964 beschrieben sind hergestellt. Dabei wird im allgemeinen von den den Estern zugrundeliegenden Säuren, Säureanhydriden oder Chloriden, wie z.B. Borsäure, C(O)Cl₂, POCl₃, SO₂Cl₂ und SiCl₄ ausgegangen und diese in bekannter Weise mit den entsprechenden ein- oder mehrwertigen Alkoholen oder Etherolen umgesetzt.

Die Menge des Weichmachers, bezogen auf das Gesamtgewicht des Pigments III und des polymeren Bindemittels IV beträgt 0 bis 200 Gew.-%, vorzugsweise 2 bis 100 Gew.-%, weiter bevorzugt 2 bis 70 Gew.- %.

Als Leitsalze können die allgemein bekannten und beispielsweise in der EP-A 0 096 629 beschriebenen Leitsalze verwendet werden. Vorzugsweise werden erfindungsgemäß als Leitsalz LiPF₆, LiBF₄, LiClO₄, LiAsF₆, LiCF₃SO₃, LiC(CF₃SO₂)₃, LiN(CF₃SO₂)₂, LiN(SO₂CₙF₂ₙ₊₁)₂, LiC[(CₙF₂ₙ₊₁)SO₂]₃, Li(CₙF₂ₙ₊₁)SO₂, mit n jeweils 2 bis 20, LiN(SO₂F)₂, LiAlCl₄, LiSiF₆, LiSbF₆, (RSO₂)ₙXLi (ₙX = ₁O, ₁S, ₂N, ₂P, ₃C, ₃Si; R= CₘF₂ₘ₊₁ mit m = 0-10 oder C₁-C₂₀-Kohlenwasserstoffe), Li-Imidsalze, oder ein Gemisch aus zwei oder mehr davon eingesetzt, wobei als Leitsalz vorzugsweise LiBF₄ eingesetzt wird. Insbesondere bevorzugt wird die Kombination der Ester der Formeln (E1a) bis (E5a) in Kombination mit LiBF₄ als Leitsalz eingesetzt, wobei hier wiederum die Kombination des Esters der Formel (E3a) mit LiBF₄ als Leitsalz besonders bevorzugt ist.

Gegebenenfalls können Dispergierharze zugesetzt werden, um die Dispergierung der Pigmente zu verbessern, wie beschrieben im Patent EP 940197

Als Trägermaterial für die erfindungsgemaß hergestellten Formkörper kommen die ublicherweise für Elektroden verwendeten Materialien, vorzugsweise Metalle wie Aluminium und Kupfer, in Betracht. Ebenso können temporare Zwischenträger, wie Folien, insbesondere Polyesterfolien, wie Polyethylenterephthalatfolien, verwendet werden. Solche Folien können vorteilhaft mit einer Trennschicht vorzugsweise aus Polysiloxanen versehen sein.

Ferner können die erfindungsgemäß verwendeten Mischungen nach oder während der Schmelzextrusion, vorzugsweise nach derselben, in an sich bekannter Weise vernetzt werden.

Dies geschieht beispielsweise durch Bestrahlung mit ionischer oder ionisierender Strahlung, Elektronenstrahl, vorzugsweise mit einer Beschleunigungsspannung zwischen 20 und 2.000 kV und einer Strahlendosis zwischen 5 und 50 Mrad, UV- oder sichtbarem Licht, wobei in üblicher Weise vorteilhaft ein Initiator wie Benzildimethylketal oder 1,3,5-Trimethylbenzoyl-triphenylphosphinoxid in Mengen von insbesondere höchstens 1 Gew.-% bezogen auf das polymere Bindemittel zugegeben werden und die Vernetzung innerhalb von im allgemeinen 0,5 bis 15 Minuten vorteilhaft unter Inertgas wie Stickstoff oder Argon durchgeführt werden kann, durch thermische radikalische Polymerisation, vorzugsweise bei Temperaturen von über 60 °C, wobei man vorteilhaft einen Initiator wie Azo-bis-isobutyronitril in Mengen von im allgemeinen höchstens 5 Gew.-%, vorzugsweise 0,05 bis 1 Gew.-% bezogen auf das polymere Bindemittel zugeben kann, durch elektrochemisch induzierte Polymerisation oder durch ionische Polymerisation erfolgen, beispielsweise durch säurekatalysierte kationische Polymerisation, wobei als Katalysator in erster Linie Säuren, vorzugsweise Lewissäuren wie BF₃, oder insbesondere LiBF₄ oder LiPF₆ in Betracht kommen. Lithiumionen enthaltende Katalysatoren wie LiBF₄ oder LiPF₆ können dabei vorteilhaft im Festelektrolyt oder Separator als Leitsalz verbleiben.

Weiterhin betrifft die vorliegende Erfindung einen Formkorper, vorzugsweise einen folienformigen Formkorper, erhaltlich durch ein Verfahren, das folgende Stufe umfaßt:
I) Compoundieren und Schmelzextrudieren einer Mischung I, die ein Gemisch II umfaßt, das enthalt
   a) 1 bis 95 Gew.-% mindestens eines Pigments III mit einer Primarpartikelgroße von 5 nm bis 20 µm das ausgewahlt wird aus der Gruppe bestehend aus einem elektrochemisch inerten Feststoffs IIIa, einer beim Laden zur Abgabe von Lithiumionen Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc
   b) 5 bis 99 Gew -% mindestens eines polymeren Bindemittels IV, und
   c) 0 bis 200 Gew.-%, bezogen auf die Gesamtmenge der Komponenten a) und b), mindestens eines Weichrnachers V,
wobei der Gewichtsanteil des Gemischs II an der Mischung I 1 bis 100 Gew.-% beträgt, und
wobei Mischungen I umfassend Gemische II enthaltend als polymeres Bindemittel IV ein Copolymer aus Vinylidenfluorid (VdF) und Hexafluorpropylen (HFP) mit einem Gehalt an HFP von 8 bis 25 Gew.-%, und als Weichmacher V eine Verbindung, die ausgewählt wird aus der Gruppe bestehend aus Dibutylphthalat, Dimethylphthalat, Diethylphthalat, Tris(butoxyethyl)phosphat, Propylencarbonat, Ethylencarbonat, Trimethyltrimellitat und Gemischen davon, ausgeschlossen sind.

Ferner betrifft die vorliegende Erfindung einen Verbundkorper, vorzugsweise in Form einer Folie, weiter bevorzugt in Form einer Folie mit einer Gesamtdicke von 15 bis 1500 µm, insbesondere mit einer Gesamtdicke von 50 bis 500 µm, erhältlich durch ein Verfahren, das die folgenden Stufen umfaßt
(I) Herstellen mindestens einer ersten Schicht durch Compoundieren und Schmelzextrudieren einer wie oben definierten Mischung I, die ein Gemisch II umfaßt, das einen Feststoff IIIb, oder einen Feststoff IIIc, wie jeweils oben definiert, enthält;
(II) Herstellen mindestens einer zweiten Schicht durch Compoundieren und Schmelzextrudieren einer wie oben definierten Mischung I, die ein Gemisch II umfaßt, das einen Feststoff IIIa, wie hierin definiert, enthalt und frei ist von einem Feststoff IIIb oder einem Feststoff IIIc, und
(III) anschließendes Zusammenbringen der mindestens einen ersten Schicht mit der mindestens einen zweiten Schicht durch ein herkommliches Beschichtungsverfahren.

Femer betrifft die vorliegende Erfindung ein Verfahren zur Herstellung eines derartigen Verbundkörpers, das die folgenden Stufen umfaßt
(I) Herstellen mindestens einer ersten Schicht durch Compoundieren und Schmelzextrudieren einer wie oben definierten Mischung I, die ein Gemisch II umfaßt, das einen Feststoff IIIb, oder einen Feststoff IIIc, wie jeweils oben definiert, enthält;
(II) Herstellen mindestens einer zweiten Schicht durch Compoundieren und Schmelzextrudieren einer wie oben definierten Mischung I, die ein Gemisch II umfaßt, das einen Feststoff IIIa, wie hierin definiert, enthalt und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren.

Vorzugsweise wird die mindestens eine zweite Schicht auf einem temporären Träger hergestellt. Dabei können erfindungsgemäß üblicherweise verwendete temporäre Träger, wie z.B. eine Trennfolie aus einem Polymer oder einem vorzugsweise beschichteten Papier, wie z.B. eine silikonisierte Polyesterfolie eingesetzt werden. Die Herstellung dieser zweiten Schicht ist jedoch auch auf einem permanenten Träger, wie z.B. einer Ableiterelektrode oder aber auch ganz ohne Träger möglich. Dabei kann diese Schicht entweder zusammen mit dem Träger extrudiert werden oder direkt auf diesen extrudiert werden.

Vorzugsweise werden bei der Herstellung der Verbundfolien Glättwerkzeuge, wie z.B. Chill-roll-Anlagen und Schlauchfolienanlagen verwendet.

Das Zusammenbringen bzw. die Herstellung der oben definierten Schichten erfolgt durch drucklose Verfahren zur Beschichtung bzw. Herstellung von Folien, wie z.B. Gießen oder Rakeln, sowie durch Verarbeitungsverfahren unter Druck, wie z.B. Extrudieren, Co-Extrudieren, Laminieren, Kaschieren, Kalandrieren oder Pressen. Gegebenenfalls kann die so hergestellte Verbundfolie durch Strahlung, elektrochemisch oder thermisch vernetzt bzw. gehärtet werden.

Wie sich aus obigem ergibt, ist es somit ohne weiteres möglich einen Verbundkörper mit den Bestandteilen Trennfolie/Separator (zweite Schicht)/ Elektrode (erste Schicht) bereitzustellen.

Ferner ist es möglich durch doppelseitige Beschichtung einen Verbundkorper mit den Bestandteilen Anode/Separator/Kathode zur Verfugung zu stellen.

Die Befüllung derartiger Verbundkörper mit einem Elektrolyt und Leitsalz kann sowohl vor dem Zusammenbringen als auch vorzugsweise nach dem Zusammenbringen der Schichten, ggf. nach dem Kontaktieren mit geeigneten Ableiterelektroden, z B einer Metallfolie, und sogar nach dem Einbringen der Schichten in ein Batteriegehäuse erfolgen, wobei die spezielle mikroporöse Struktur der Schichten bei Verwendung der erfindungsgemäßen Mischung, insbesondere bedingt durch die Anwesenheit des oben definierten Feststoffs im Separator und ggf. in den Elektroden, das Aufsaugen des Elektrolyten und des Leitsalzes und die Verdrängung der Luft in den Poren ermöglicht. Das Befullen kann bei Temperaturen von 0 °C bis ungefähr 100°C in Abhängigkeit vom verwendeten Elektrolyt durchgeführt werden.

Die Formkörper werden durch Compoundieren und Schmelzextrudieren, vorzugsweise bei ungefähr 50 bis ungefähr 250 °C, hergestellt.

Als Vorrichtungen zur Extrusion werden dabei vorzugsweise ein Plastifizier-Einschneckenextruder, wie z.B. ein Berstorff-Einwellen-Mischextruder, ein Frenkel-Mischer, ein Plastifikator oder ein Buss-Ko-Kneter, ein Zweischnekenextruder vom gleichlaufenden oder vom gegenlaufenden Typ, wie z.B. ein Extruder mit COLOMBO-Schnecken, ein Extruder mit dichtkämmenden ZSK-Schnecken, ein Extruder mit Holo-Flite-Doppelschnecken, eine Leistritz-Knetpumpe, ein Extruder mit Pasquetti-Doppelschnecke, ein Extruder mit Cotruder-Schnecken, ein Extruder vom Kestermann-Typ, ein Extruder mit Mapré-Doppelschnecken, eine GETECHA-Knetstrangpresse, ein Anger-Tandem-Extruder, ein Zimmermann-Jansen-Extruder, ein Zweiwellen-Durchlaufkneter, wie z.B. ein DSM-Zweiwellenmischer, ein Eck-Mixtruder, ein FCM-Kneter oder ein List-Allphasen Gerät oder ein kontinuierlicher Mehrwellenextruder, wie z.B. ein Vierschnecken-Extruder oder ein Planetwalzen-Extruder, oder eine Kombination aus zwei oder mehr davon verwendet.

Als besonders bevorzugte Vorrichtungen sind Ein- und Zwei-Schneckenmaschinen, wie z. B einwellige Mischextruder (Reifenhauser, Krauss Maffei, Berstorff), gleichlaufende oder gegenlaufende, dichtkämmende Zweischneckenkneter (Werner und Pfleiderer, Berstorff, APV), Mehrschneckenextruder, Buss Ko-Kneter oder gegenlaufende, nicht kämmende Kneter (Farrel, JSW) geeignet.

Schnecken und Zylinder der kontinuierlich betriebenen Extrusionsanlage ZSK 30 sind modular aufgebaut. Zur ausreichenden Plastifizierung, Dispergierung und Homogenisierung der Einzelkomponenten besteht das Verfahrensteil aus maximal 15 Zylinderzonen, entsprechend 45 Einheiten Länge pro Durchmesser. Jede Zone ist separat mit einer elektrischen Heizung ausgerüstet. Die Gehäuse werden mit Druckluft oder Wasser gekühlt.

Die Schnecke besteht aus mehreren Förder-, Plastifizier- und Mischzonen. Eine spezielle Konfiguration unterschiedlicher Knet- und Mischelemente ist zur schonenden, homogenen Dispergierung der Feststoffe, explizit der anorganischen Pigmente, im polymeren Bindemittel notwendig.

Soll der erfindungsgemaße Formkörper als Festelektrolyt in einer elektrochemischen Zelle eingesetzt werden, so sollten eine dissoziierbare, Lithiumkationen enthaltende Verbindung, ein sogenanntes Leitsalz wie oben definiert, und weitere Zusatzstoffe, wie insbesondere organische Lösungsmittel, ein sogenannter Elektrolyt, inkorporiert werden.

Diese Stoffe können teilweise oder vollständig bei der Herstellung der Schicht der Suspension beigemischt oder nach der Herstellung der Schicht in die Schicht eingebracht werden.

Als organische Elektrolyte kommen die Ester der allgemeinen Formel (E1) bis (E5) sowie die vorstehend unter "Weichmacher V" diskutierten Verbindungen in Frage, wobei vorzugsweise diese Ester insbesondere solche der Formel (E3), sowie die ublichen organischen Elektrolyte, bevorzugt Ester wie Ethylencarbonat, Propylencarbonat, Dimethylcarbonat und Diethylcarbonat oder Gemische solcher Verbindungen eingesetzt werden

Fur elektrochemische Zellen geeignete erfindungsgemaße Festelektrolyte, Separatoren und/oder Elektroden sollten vorteilhaft eine Dicke von 5 bis 500 µm, vorzugsweise 10 bis 500 µm, weiter bevorzugt 10 bis 200 µm und insbesondere 10 bis 50 µm aufweisen.

Wie sich aus dem obigem ergibt, betrifft die vorliegende Erfindung auch die Verwendung eines erfindungsgemaßen Formkörpers oder Verbundkörpers, oder eines Formkorpers bzw Verbundkorpers, hergestellt mittels eines erfindungsgemäßen Verfahrens zur Herstellung eines Festelektrolyten, eines Separators, einer Elektrode, in einem Sensor, einem elektrochromen Fenster, einem Display, einem Kondensator oder einer ionenleitenden Folie.

Ferner betrifft die Erfindung einen Separator, einen Festelektrolyten, eine Elektrode, einen Sensor, ein elektrochromes Fenster, ein Display, einen Kondensator oder eine ionenleitende Folie umfassend einen erfindungsgemäßen oder erfindungsgemäß hergestellten Form- oder Verbundkörper, sowie eine elektrochemische Zelle, umfassend einen Separator, Festelektrolyt oder eine Elektrode, wie oben definiert, oder eine Kombination aus zwei oder mehr davon.

Diese elektrochemische Zelle kann insbesondere als Autobatterie, Gerätebatterie oder Flachbatterie verwendet werden.

Somit betrifft die vorliegende Erfindung auch eine Autobatterie, Gerätebatterie oder Flachbatterie, die die oben definierte elektrochemische Zelle umfaßt.

### Beispiele

Zur Veranschaulichung der prinzipiellen Abläufe innerhalb des erfindungsgemäßen Verfahrens sind dieser Anmeldung drei Figuren beigefügt.
- Figur 1: zeigt eine schematische Darstellung der Herstellung einer Kathodenfolie mittels eines Extruders und eines Extruders mit Seitenextruder;
- Figur 2: zeigt eine schematische Darstellung einer Co-Extrusion einer erfindungsgemäß verwendeten Mischung zusammen mit einer PET-Folie;
- Figur 3: zeigt eine schematische Darstellung der Herstellung einer Kathoden-(LiMn₂O₄) bzw. Anodenfolie (MCMB).

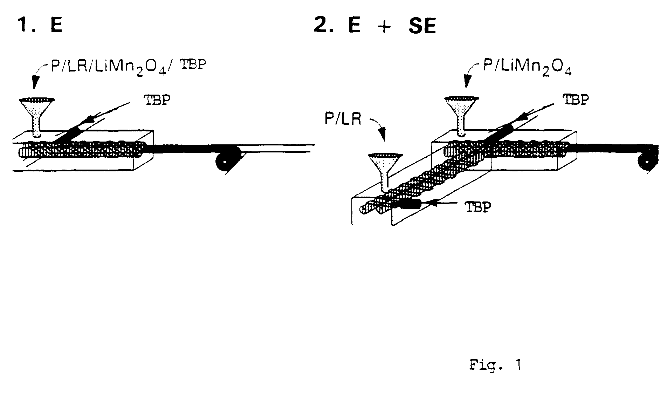

Zunächst sollen die Prinzipien des erfindungsgemäßen Herstellungsverfahrens, wie sie in Figur 1 schematisch dargestellt sind, beispielhaft an einem gleichsinnig drehenden, dichtkämmenden Zweischneckenkneter ZSK 30 der Fa. Werner und Pfleiderer beschrieben werden.

Der gleichsinnig drehende und dichtkämmende und damit selbstreinigende Extruder (E) besteht aus mehreren (bis zu 15) variablen montierbaren Einzelzonen, die über Heizkreisläufe temperiert werden können.

### Zugabe der Komponenten

a) Die Polymere (P) wurden mit dem Pigment und einem Teil des Weichmachers in einem Fluidmischer homogen verteilt. Die Zugabe erfolgte über eine Dosierwaage Gegebenenfalls wurde der Extruder mit Stickstoff inertisiert.
b) Der Weichmacher wurde gegebenenfalls über eine Dosierpumpe in der Aufschmelzzone des Extruders zudosiert.
c) Der Leitruß (LR) wurde uber einen Seitenextruder (SE) in der Aufschmelzphase zudosiert. Der Seitenextruder war ein Ein- oder Zweiwellenextruder. Gegebenenfalls wurde eine homogene Schmelze aus Polymer, Weichmacher und Leitruß und gegebenenfalls Dispergierharz in dem Seitenextruder hergestellt und in den Hauptextruder seitlich zugefahren.

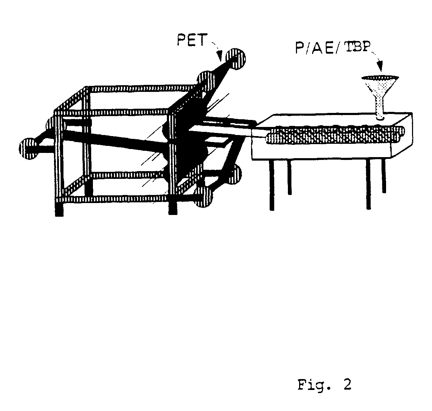

Die Folie wurde über eine Flachdüse ausgetragen und kalandriert. Gegebenenfalls wurde die Folie zwischen zwei Folien (z.B. Polyethylenterephthalat (PET)) coextrudiert (Fig. 2). Die Dicke der Batteriefolien lag zwischen 10 - 1000 µm.

Als Vorteile des erfindungsgemäßen Herstellungsverfahrens sind zu nennen:
1. Lösungsmittel entfällt
2. Trocknung der Batteriefolien entfällt
3. Extraktion und Extraktionslösungsmittel entfallen
4. Folie kann ohne weitere Vorbehandlung in die Batterie eingebaut werden
5. Homogenere Verteilung der Pigmente
6. Bessere mechanische Stabilität der Filme (als über Gießtechnologie hergestellte Folie.

### Herstellungsbeispiel für einen Ester

Zur Herstellung des Phosphoresters der Formel O=P(-O-CH₂-CH₂-OCH₃)₃ wurden 274 g (3,6 mol) Methylglycol mit 2 g ZnCl₂ in einem 1.000 ml-Rundkolben vorgelegt und auf 5 °C abgekühlt. Anschließend wurden 153,33 g (1 mol) POCl₃ innerhalb von 50 min zugetropft, wobei die Temperatur bei ungefähr 5 °C bis 10 °C gehalten wurde. Nach dem Ende der Zugabe wurde eine klare Lösung erhalten, die man sich auf Raumtemperatur erwärmen ließ Anschließend wurde das erhaltene Produktgemisch unter Vakuum (80 bis 90 mbar) bei ungefähr 50 °C bis 55 °C destilliert, um nicht umgesetztes Edukt und Nebenprodukte abzutrennen.

Anschließend wurde im Hochvakuum (ungefähr 0,02 mbar) bei einer Temperatur von ungefähr 170°C weiter destilliert und das gewünschte Produkt erhalten. Der Wassergehalt des obigen Phosphoresters betrug 20ppm.

### Beispiel 1 Herstellung einer Kathodenfolie

| | |
|---|---|
| 4 910 g | LiMn₂O₄ |
| 1.310 g | Polyvinylidenfluorid-*co*-hexafluoropropen Kynar® 2801 (Elf Atochem) |
| 1.030 g | Leitruß Super® P (MMM Carbon) |
| 2.740 g | Tributylphosphat (TBP) |

### Aufbau des Extruders:

Gleichsinnig drehender Zweiwellenhauptextruder ZSK30 mit 10 variablen heizbaren Heizzonen. In der vierten Zone war ein gleichsinnig drehender Zweiwellenseitenextruder ZSK30 mit 6 variablen heizbaren Heizzonen angebaut.

### Herstellung

180 g/h eines Gemischs aus 100 Teilen Kynar® 2801 und 5 Teilen Propylencarbonat und 442 g/h Leitruß Super® P wurden in die erste Zone des Seitenextruder ZSK30 zudosiert Weiterhin wurden 1075 g/h Propylencarbonat in die Aufschmelzzone (Zone 2) des Seitenextruders zugepumpt. Diese Schmelze wurde in die Aufschmelzzone (Zone 4) des Hauptextruder zugefahren. Außerdem wurden 2.600 g einer Mischung aus 15,1 Teilen Kynar® 2801, 81,1 Teilen LiMn₂O₄ und 3,8 Teilen Propylencarbonat in die erste Zone des Hauptextruders zudosiert. Die Innentemperatur in den beiden Extrudern betrug 150°C Über eine beheizbare Breitschlitzdüse (150°C) mit einer Spaltbreite von 5 mm wurde die Schmelze ausgetragen und zwischen zwei PET-Folien coextrudiert und anschließend kalandriert.

Die erhaltene Folie besaß folgende Eigenschaften.

| | |
|---|---|
| Oberflachenwiderstand | 140 Ohm |
| Foliendicke | 100-500 µm |

### Beispiel 2. Herstellung einer Anodenfolie

Zusammensetzung:

| | |
|---|---|
| 5.600 g | MCMB (Osaka Gas) |
| 1. 500 g | Polyvinylidenfluorid-*co*-hexafluoropropen Kynar® 2801 (Elf Atochem) |
| 400 g | Leitruß Super® P (MMM Carbon) |
| 2.500 g | Tributylphosphat |

Aufbau des Extruders: s. Beispiel 1

### Herstellung.

180 g/h einer Mischung aus 100 Teilen Kynar® 2801 und 5 Teilen Propylencarbonat und 150 g/h Leitruß Super® P (SP) wurden in die erste Zone des Seitenextruder ZSK30 zudosiert. Weiterhin wurden 841 g/h Propylencarbonat in die Aufschmelzzone (Zone 2) des Seitenextruders zugepumpt. Diese Schmelze wurde in die Aufschmelzzone (Zone 4) des Hauptextruder zugefahren.

Außerdem wurden 2.600 g/h eines Gemischs aus 15,1 Teilen Kynar® 2801, 80,8 Teilen MCMB und 3,4 Teilen Propylencarbonat in die erste Zone des Hauptextruders zudosiert. Die Innentemperatur in den beiden Extrudern betrug 150°C.

Uber eine beheizbare Breitschlitzdüse (150°C) mit einer Spaltbreite von 5 mm wurde die Schmelze ausgetragen und zwischen zwei PET-Folien coextrudiert und anschließend kalandriert.

Die erhaltene Folie besaß folgende Eigenschaften.

| | |
|---|---|
| Oberflachenwiderstand | 80 Ohm |
| Foliendicke | 50-300 µm |

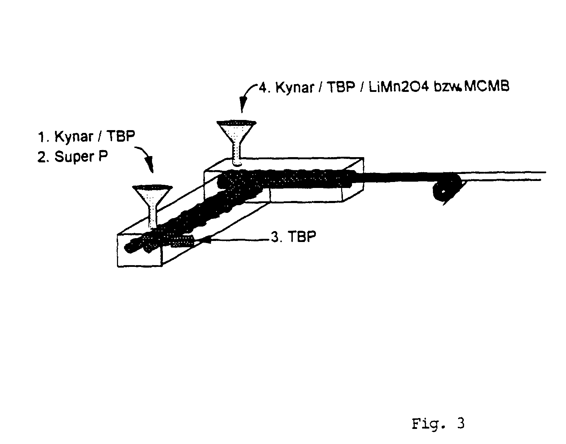

Die Herstellung der obigen Kathoden- bzw. Anodenfolie ist in Figur 3 schematisch dargestellt.

### Beispiel 3 Herstellung einer Separatorfolie

| | |
|---|---|
| 3 000 g | Polyvinylidenfluorid-*co*-hexafluoropropen Kynar® 2801, (Elf Atochem) |
| 2 000 g | Aerosil® R 812 (Degussa) (AE) |
| 5 000 g | Tributylphosphat |

### Herstellung.

4 500 g/h einer Mischung aus 30 Teilen Kynar® 2801, 20 Teilen Aerosil® R 812 und 50 Teilen Tributylphosphat werden in einen gleichsinnig drehenden Zweiwellenextruder ZSK40 mit 10 variablen heizbaren Heizzonen zudosiert. Die Innentemperatur im Extruder beträgt 150 °C. Über eine beheizbare Breitschlitzdüse mit einer Spaltbreite von 1 mm wird die Schmelze ausgetragen und zwischen zwei PET-Folien co-extrudiert und anschließend kalandriert.
Foliendicke. 20 bis 100 µm

### Beispiel 4

| | |
|---|---|
| 3.000 g | Polymethacrylat (Luryl® PMMA G88, BASF) |
| 2.000 g | Aerosil® R 812 (Degussa) |
| 5 000 g | Tributylphosphat |

### Herstellung wie Beispiel 3

### Beispiel 5

| | |
|---|---|
| 3.000 g | Polyacrylnitril (Dralon® T, Bayer) |
| 2.000 g | Aerosil® R 812 (Degussa) |
| 5.000 g | Tributylphosphat |

### Herstellung wie Beispiel 3

### Beispiel 6

| | |
|---|---|
| 3.000 g | Polyethylen (Lupolen®, BASF) |
| 2.000 g | Aerosil® R 812 (Degussa) |
| 5.000 g | Tributylphosphat |

### Herstellung wie Beispiel 3

### Beispiel 7

| | |
|---|---|
| 3.000 g | Polypropylen (Novolen®, BASF) |
| 2.000 g | Aerosil® R 812 (Degussa) |
| 5.000 g | Tributylphosphat |

### Herstellung wie Beispiel 3

### Beispiel 8

| | |
|---|---|
| 3 000 g | Polyvinylidenfluorid-*co*-hexafluoropropen Kynar® 2801 (Elf Atochem) |
| 2.000 g | Aerosil® R 812 (Degussa) |
| 5.000 g | Dibutylcarbonat |

### Herstellung wie Beispiel 3

### Beispiel 9

| | |
|---|---|
| 3.000 g | Polyvinylidenfluorid-*co*-hexafluoropropen Kynar® 2801 (Elf Atochem) |
| 1.500 g | Aerosil® R 812 (Degussa) |
| 1.000 g | Wollastonit (Tremin® 8000 EST, Quarzwerke, Frechen) |
| 5.000 g | Tributylphosphat |

### Herstellung wie Beispiel 3

### Beispiel 10

| | |
|---|---|
| 2.000 g | Polyvinylidenfluorid-*co*-hexafluoropropen Kynar® 2801 (Elf Atochem) |
| 1.000 g | Polyethylenoxid (Polyox®, Union Carbid) |
| 2.000 g | Aerosil® R 812 (Degussa) |
| 5.000 g | Dibutylcarbonat |

### Herstellung wie Beispiel 3.

### Beispiel 11

| | |
|---|---|
| 4 000 g | Polypropylen (Novolen® MC 3200, BASF) |
| 6.000 g | VP-Titandioxid T 805 (Degussa) |
| 1 000 g | Tris(2-ethylhexyl)phosphat |

### Herstellung wie Beispiel 3

### Beispiel 12

Aus der Kathodenfolie gemäß Beispiel 1, der Anodenfolie gemäß Beispiel 2 und der Separatorfolie gemäß Beispiel 3 wurde ein Verbundkörper mit folgendem Aufbau durch Laminieren bei einer Temperatur von 140°C hergestellt:
Kathodenfolie/Metallgitterfolie (Aluminium)/Kathodenfolie
Separatorfolie
Anodenfolie/Metallgitterfolie (Kupfer)/Kathodenfolie.

Der Verbundkörper wurde eine halbe Stunde in eine 1 molare Lösung von LiPF₆ in Dimethylcarbonat/Ethylencarbonat eingetaucht und anschließend in ein Flachbatteriegehäuse eingebracht. Der Verbundkörper wies eine gute Quellresistenz auf.

## Patentansprüche

1. Verfahren zur Herstellung eines Formkorpers, vorzugsweise eines folien formigen Formkorpers, das folgende Stufe umfaßt:
I) Compoundieren und Schmelzextrudieren einer Mischung I, die ein Gemisch II umfaßt, das enthält:
a) 1 bis 95 Gew-% mindestens eines Pigments III mit einer Primarpartikelgröße von 5 nm bis 20 µm, das ausgewählt wird aus der Gruppe bestehend aus einem elektrochemisch inerten Feststoff IIIa, einer beim Laden zur Abgabe von Lithiumionen befähigte Verbindung IIIb und einer beim Laden zur Aufnahme von Lithiumionen befahigten Verbindung IIIc, und einem Gemisch des Feststoffs IIIa mit der Verbindung IIIb oder der Verbindung IIIc,
b) 5 bis 99 Gew.-% mindestens eines polymeren Bindemittels IV, und
c) 0 bis 200 Gew.-%, bezogen auf die Gesamtmenge der Komponenten a) und b), mindestens eines Weichmachers V,
wobei der Gewichtsanteil des Gemischs II an der Mischung I 1 bis 100 Gew.-% beträgt, und
wobei Mischungen I umfassend Gemische II enthaltend als polymeres Bindemittel IV ein Copolymer aus Vinylidenfluorid (VdF) und Hexa-fluorpropylen (HFP) mit einem Gehalt an HFP von 8 bis 25 Gew -% und als Weichmacher V eine Verbindung, die ausgewählt wird aus der Gruppe bestehend aus Dibutylphthalat, Dimethylphthalat, Diethylphthalat, Tris(butoxyethyl)phosphat, Propylencarbonat, Ethylencarbonat, Trimethyltrimellitat und Gemischen davon, ausgeschlossen sind.

2. Verfahren nach Anspruch 1, wobei das Pigment III ein Feststoff IIIa ist, der ausgewählt wird aus der Gruppe bestehend aus einem anorganischen Feststoff, vorzugsweise einem anorganischen basischen Feststoff, ausgewählt aus der Gruppe bestehend aus Oxiden, Mischoxiden, Silicaten, Sulfaten, Carbonaten, Phosphaten, Nitriden, Amiden, Imiden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid; Polyamiden; Polyimiden; und einer Feststoffdispersion enthaltend ein derartiges Polymer; und einem Gemisch aus zwei oder mehr davon.

3. Verfahren nach Anspruch 1 oder 2, wobei das Pigment III eine beim Laden zur Abgabe von Lithiumionen befähigte Verbindung IIIb ist, die ausgewählt wird aus der Gruppe bestehend aus LiCoO₂, LiNiO₂, LiNiₓCo_{y}O₂, LiNiₓCo_{y}Al_{z}O₂, mit 0<x,y,z£1, LixMnO₂ (0<x£1), LiₓMn₂O₄ (0<x£2), LiₓMoO₂ (0<x£2), LiₓMnO₃ (0<x£1), LiₓMnO₂ (0<x£2), LiₓMn₂O₄ (0<x£2), LiₓV₂O₄ (0<x£2.5), LiₓV₂O₃ (0<x£3.5), LiₓVO₂ (0<x£1), LiₓWO₂ (0<x£1), LiₓWO₃ (0<x£1), LiₓTiO₂ (0<x£1), LiₓTi₂O₄ (0<x£2), LiₓRuO₂ (0<x£1), LiₓFe₂O₃ (0<x£2), LiₓFe₃O₄ (0<x£2), LiₓCr₂O₃ (0<x£3), LiₓCr₃O₄ (0<x£3.8), LiₓV₃S₅ (0<x£1.8), LiₓTa₂S₂ (0<x£1), LiₓFeS (0<x£1), LiₓFeS₂ (0<x£1), LiₓNbS₂ (0<x£2.4), LiₓMoS₂ (0<x£3), LiₓTiS₂ (0<x£2), LiₓZrS₂ (0<x£2), LiₓNbSe₂ (0<x£3), LiₓVSe₂ (0<x£1), LiₓNiPS₂ (0<x£1, 5), LiₓFePS₂ (0<x£1.5), LiNiₓB₁₋ₓO₂(0 < x < 1), LiNiₓAl₁₋ₓO₂(0 < x < 1), LiNiₓMg₁₋ₓO₂(0 < x < 1), LiNiₓCo₁₋ₓVO₄ (1 ≥ x ≥ 0), LiNiₓCo_{y}Mn_{z}O₂(x+y+z = 1), LiFeO₂, LiCrTiO₄, LiₐM_{b}L_{c}O_{d} (1,15 ≥ a > 0; 1,3 ≥ b+c ≥ 0,8, 2,5 ≥ d ≥1,7; M = Ni, Co, Mn; L = Ti, Mn, Cu, Zn, Erdalkalimetalle), LiCu_{X}^{II}Cu_{Y}^{III}Mn_{(2-(x+y))} O₄ (2 > x+y ≥ 0), LiCrTiO₄, LiGaₓMn₂₋ₓO₄ (0, 1 ≥ x ≥ 0), Polycarbonsulfide der allgemeinen Struktur: -[C(Sₓ)]ₙ-, V₂O₅, einem Gemisch aus zwei oder mehr davon, und einem Gemisch der Verbindung IIIb mit dem Feststoff IIIa; und die Mischung I zusätzlich 0,1 bis 20 Gew.-%, bezogen auf das Gemisch II, Leitruß enthalt.

4. Verfahren nach Anspruch 1 oder 2, wobei das Pigment III eine beim Laden zur Aufnahme von Lithiumionen befähigte Verbindung IIIc ist, die ausgewählt wird aus der Gruppe bestehend aus Lithium, einer Lithium enthaltenden Metallegierung, micronisiertem Kohlenstoffruß, natürlichem und synthetischem Graphit, synthetisch graphitiertem Kohlestaub, einer Kohlefaser, Titanoxid, Zinkoxid, Zinnoxid, Molybdänoxid, Wolframoxid, Titancarbonat, Molybdäncarbonat, Zinkcarbonat, LiₓM_{y}SiO_{Z} (1 > x ≥ 0, 1 > y ≥ 0, z > 0), Sn₂BPO₄, konjungierten Polymeren wie z.B. Polypyrrole, Polyaniline, Polyacetylene, Polyphenylene, Lithiummetallverbindungen LiₓM, wie z.B. solche mit M = Sn, Bi, Sb, Zn, Cd, Pb und 5 ≥ x ≥ 0; Li-Sn-Cd, CdO, PbO, einem Gemisch aus zwei oder mehr davon, und einem Gemisch der Verbindung IIIc mit dem Feststoff IIIa; und die Mischung I zusätzlich bis zu 20 Gew.-%, bezogen auf das Gemisch II, Leitruß enthält.

5. Verfahren nach einem der Ansprüche 1 bis 4, wobei die Mischung I während oder nach der Schmelzextrusion vemetzt wird.

6. Verfahren nach einem der vorstehenden Anspruche, wobei das Gemisch in einer Vorrichtung, die ausgewählt wird aus der Gruppe bestehend aus einem Plastifizier-Einschneckenextruder, einem Zweischneckenextruder vom gleichlaufenden Typ, einem Zweischneckenextruder vom gegenlaufenden Typ, einem Zweiwellen-Durchlaufkneter und einem kontinuierlichen Mehrwellenextruder und einer Kombination aus zwei oder mehr davon schmelzextrudiert wird.

7. Verfahren zur Herstellung eines Verbundkörper, das die folgenden Stufen umfaßt:
(I) Herstellen mindestens einer ersten Schicht durch Compoundieren und Schmelzextrudieren einer wie in Anspruch 1 definierten Mischung I, die ein Gemisch II umfaßt, das einen Feststoff IIIb, oder einen Feststoff IIIc, wie in Anspruch 3 bzw. 4 definiert, enthält;
(II) Herstellen mindestens einer zweiten Schicht durch Compoundieren und Schmelzextrudieren einer wie in Anspruch 1 definierten Mischung I, die ein Gemisch II umfaßt, das einen Feststoff IIIa, wie in Anspruch 2 definiert, enthält und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren

8. Formkörper, vorzugsweise folienförmiger Formkörper, erhältlich durch ein Verfahren, das folgende Stufe umfaßt:
I) Compoundieren und Schmelzextrudieren einer Mischung I, die ein Gemisch II umfaßt, das enthält:
a) 1 bis 95 Gew-% mindestens eines Pigments III mit einer Primarpartikeigröße von 5 nm bis 20 µm, das ausgewählt wird aus der Gruppe bestehend aus einem elektrochemisch inerten Feststoffs IIIa, einer beim Laden zur Abgabe von Lithiumionen Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc
b) 5 bis 99 Gew-% mindestens eines polymeren Bindemittels IV, und
c) 0 bis 200 Gew -%, bezogen auf die Gesamtmenge der Komponenten a) und b), mindestens eines Weichmachers V,
wobei der Gewichtsanteil des Gemischs II an der Mischung I 1 bis 100 Gew.-% beträgt, und
wobei Mischungen I umfassend Gemische II enthaltend als polymeres Bindemittel IV ein Copolymer aus Vinylidenfluorid (VdF) und Hexafluorpropylen (HFP) mit einem Gehalt an HFP von 8 bis 25 Gew.-%, und als Weichmacher V eine Verbindung, die ausgewählt wird aus der Gruppe bestehend aus Dibutylphthalat, Dimethylphthalat, Diethylphthalat, Tris(butoxyethyl)phosphat, Propyiencarbonat, Ethylencarbonat, Trimethyltrimellitat und Gemischen davon, ausgeschlossen sind.

9. Verbundkörper, erhältlich durch ein Verfahren das die folgenden Stufen umfaßt:
(I) Herstellen mindestens einer ersten Schicht durch Compoundieren und Schmelzextrudieren einer wie in Anspruch 1 definierten Mischung I, die ein Gemisch II umfaßt, das einen Feststoff IIIb, oder einen Feststoff IIIc, wie in Anspruch 3 bzw. 4 definiert, enthält;
(II) Herstellen mindestens einer zweiten Schicht durch Compoundieren und Schmelzextrudieren einer wie in Anspruch 1 definierten Mischung I, die ein Gemisch II umfaßt, das einen Feststoff IIIa, wie in Anspruch 2 definiert, enthält und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren.

10. Verwendung eines Formkörpers gemäß Anspruch 8 oder eines Formkörpers, hergestellt mittels eines Verfahrens gemäß einem der Ansprüche 1 bis 6 oder eines Verbundkörpers gemäß Anspruch 9 oder eines Verbundkörpers hergestellt mittels eines Verfahrens gemäß Anspruch 7 zur Herstellung eines Festelektrolyten, eines Separators, einer Elektrode, in einem Sensor, einem elektrochromen Fenster, einem Display, einem Kondensator oder einer ionenleitenden Folie.

11. Separator, Festelektrolyt, Elektrode, Sensor, elektrochromes Fenster, Display, Kondensator oder ionenleitende Folie umfassend einen Formkörper gemäß Anspruch 8 oder einen Formkörper, hergestellt mittels eines Verfahrens gemäß einem der Ansprüche 1 bis 6 oder einen Verbundkörper gemäß Anspruch 9 oder einen Verbundkörper hergestellt mittels eines Verfahrens gemäß Anspruch 7.

12. Elektrochemische Zelle, umfassend einen Separator, Festelektrolyt oder eine Elektrode gemäß Anspruch 11 oder eine Kombination aus zwei oder mehr davon.

13. Verwendung der elektrochemischen Zelle gemäß Anspruch 12 als Autobatterie, Gerätebatterie oder Flachbatterie.

## Claims

1. A method for producing a molded article, preferably a sheet-type molded article, which method comprises the following stage:
I) Compounding and melt extrusion of a mixture I which comprises a blend II which contains:
a)from 1 to 95 wt% of at least one pigment III having a primary particle size of from 5 nm to 20 µm which is selected from the group consisting of an electrochemically inert solid IIIa, a compound IIIb which during charging is able to give off lithium ions, and a compound IIIc which during charging is able to take up lithium ions, and a mixture of the solid IIIa with the compound IIIb or the compound IIIc,
b)from 5 to 99 wt% of at least one polymeric binder IV, and
c)from 0 to 200 wt%, based on the total amount of the components a) and b), at least one plasticizer V,
wherein the proportion by weight of the blend II in the mixture I is from 1 to 100 wt%, and
wherein mixtures I comprising blends II containing, as the polymeric binder IV, a copolymer of vinylidene fluoride (VdF) and hexafluoropropylene (HFP) having an HFP content of from 8 to 25 wt% and, as the plasticizer V, a compound selected from the group consisting of dibutyl phthalate, dimethyl phthalate, diethyl phthalate, tris(butoxyethyl) phosphate, propylene carbonate, ethylene carbonate, trimethyl trimellitate and mixtures thereof are excluded.

2. A method as claimed in claim 1, wherein the pigment III is a solid IIIa which is selected from the group consisting of an inorganic solid, preferably an inorganic basic solid, selected from the group consisting of oxides, mixed oxides, silicates, sulfates, carbonates, phosphates, nitrides, amides, imides and carbides of the elements of the Ist, IInd, IIIrd or IVth main group or the IVth subgroup of the Periodic Table of the Elements; a polymer selected from the group consisting of polyethylene, polypropylene, polystyrene, poly(tetrafluoroethylene), poly(vinylidene fluoride); polyamides; polyimides; and a solid dispersion containing a polymer of this type; and a mixture of two or more thereof.

3. A method as claimed in claim 1 or 2, wherein the pigment III is a compound IIIb which, during charging, is able to give off lithium ions and which is selected from the group consisting of LiCoO₂, LiNiO₂, LiNiₓCO_{y}O₂, LiNiₓCo_{y}Al_{z}O₂, where 0<x,y,z≤1, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1.5), LiₓFePS₂ (0<x≤1.5), LiNiₓB₁₋ₓO₂(0<x<1), LiNiₓAl₁₋ₓO₂ (0<x<1), LiNiₓMg₁₋ₓO₂ (0<x<1), LiNiₓCo₁₋ₓVO₄ (1≥x≥0), LiNiₓCo_{y}Mn_{z}O₂(x+y+z=1), LiFeO_{2,} LiCrTiO_{4,} LiₐM_{b}L_{c}O_{d} (1.15≥a>0; 1.3≥b+c≥0.8; 2.5≥d≥1.7; M=Ni,Co,Mn; L=Ti,Mn,Cu,Zn alkaline earth metals), LiCuₓ^{II}Cu_{y}^{III}Mn_{(2-(x+y))}O₄ (2>x+y≥0), LiCrTiO_{4,} LiGaₓMn₂₋ₓO₄ (0.1≥x≥0), polycarbonsolfides of the structure: -[C(Sₓ)]ₙ-, V₂O_{5,} a mixture of two or more thereof, and a mixture of the compound IIIb with the solid IIIa; and the mixture I additionally contains from 0.1 to 20 wt%, based on the blend II, of conductive black.

4. A method as claimed in claim 1 or 2, wherein the pigment III is a compound IIIc which, during charging, is able to take up lithium ions and which is selected from the group consisting of lithium, a lithium-containing metal alloy, micronized carbon black, natural and synthetic graphite, synthetically graphitized carbon dust, a carbon fiber, titanium oxide, zinc oxide, tin oxide, molybdenum oxide, tungsten oxide, titanium carbonate, molybdenum carbonate, zinc carbonate, LiₓM_{y}SiO_{z} (1>x≥0, 1>y≥0, z>0), Sn₂BPO₄, conjugated polymers such as e.g. polypyrrole, polyaniline, polyacetylene, polyphenylene, lithium metal compounds LiₓM such as e.g. those where M=Sn, Bi, Sb, Zn, Cd or Pb and 5≥x≥0; Li-Sn-Cd, CdO, PbO, a mixture of two or more thereof, and a mixture of the compound IIIc with the solid IIIa; and the mixture I additionally contains up to 20 wt%, based on the blend II, of conductive black.

5. A method as claimed in any one of claims 1 to 4, wherein the mixture I is cross-linked during or after the melt extrusion.

6. A method as claimed in any one of the preceding claims, wherein the mixture is melt-extruded in an apparatus selected from the group consisting of a plasticating single-screw extruder, a twin-extruder of the corotating type, a twin-screw extruder of the counterrotating type, a twin-shaft continuous kneader and a continuous multishaft extruder and a combination of two or more thereof.

7. A method for producing a composite body, which method comprises the following stages:
(I) the preparation of at least one first layer by compounding and melt extrusion of a mixture I as defined in claim 1, said mixture comprising a blend II which contains a solid IIIb or a solid IIIc as defined in claim 3 and 4, respectively;
(II) the preparation of at least one second layer by compounding and melt extrusion of a mixture I as defined in claim 1, said mixture comprising a blend II which contains a solid IIIa, as defined in claim 2, and is free from a solid IIIb or a solid IIIc, and;
(III) a subsequent bringing together of the at least one first layer and the at least one second layer by a conventional facing method.

8. A molded article, preferably a sheet-like molded article which can be obtained by a method, which method comprises the following stage:
I) Compounding and melt extrusion of a mixture I which comprises a blend II which contains:
a)from 1 to 95 wt% of at least one pigment III having a primary particle size of from 5 nm to 20 µm which is selected from the group consisting of an electrochemically inert solid IIIa, a compound IIIb which during charging is able to give off lithium ions, and a compound IIIc which during charging is able to take up lithium ions, and a mixture of the solid IIIa with the compound IIIb or the compound IIIc,
b)from 5 to 99 wt% of at least one polymeric binder IV, and
c)from 0 to 200 wt%, based on the total amount of the components a) and b), of at least one plasticizer V,
wherein the proportion by weight of the blend II in the mixture I is from 1 to 100 wt%, and
wherein mixtures I comprising blends II containing, as the polymeric binder IV, a copolymer of vinylidene fluoride (VdF) and hexafluoropropylene (HFP) having an HFP content of from 8 to 25 wt% and, as the plasticizer V, a compound selected from the group consisting of dibutyl phthalate, dimethyl phthalate, diethyl phthalate, tris(butoxyethyl) phosphate, propylene carbonate, ethylene carbonate, trimethyl trimellitate and mixtures thereof are excluded.

9. A composite body which can be obtained by a method, which method comprises the following stages:
(I) the preparation of at least one first layer by compounding and melt extrusion of a mixture I as defined in claim 1, said mixture comprising a blend II which contains a solid IIIb or a solid IIIc as defined in claim 3 and 4, respectively;
(II) the preparation of at least one second layer by compounding and melt extrusion of a mixture I as defined in claim 1, said mixture comprising a blend II which contains a solid IIIa, as defined in claim 2, and is free from a solid IIIb or a solid IIIc, and;
(III)a subsequent bringing together of the at least one first layer and the at least one second layer by a conventional facing method.

10. The use of a molded article as claimed in claim 8 or a molded article produced by means of a method as claimed in any ones of claims 1 to 6 or of a composite body as claimed in claim 9 or of a composite body produced by means of a method as claimed in claim 7 for fabricating a solid electrolyte, a separator, an electrode, in a sensor, in an electrochromic window, in a display, in a capacitor or in an ion-conducting foil.

11. A separator, solid electrolyte, electrode, sensor, electrochromic window, display, capacitor or ion-conducting foil comprising a molded article as claimed in claim 8 or a molded article produced by means of a method as claimed in any one of claims 1 to 6, or a composite body as claimed in claim 9 or a composite body produced by means of a method as claimed in claim 7.

12. Electrochemical cell comprising a separator, solid electrolyte or electrode as claimed in claim 11 or a combination of two or more thereof.

13. The use of the electrochemical cell as claimed in claim 12 as a motor vehicle battery, appliance battery or flat-type battery.

## Revendications

1. Procédé de préparation d'un corps moulé, de préférence d'un corps moulé en forme de feuille, comprenant l'étape suivante consistant à :
I) formuler et extruder à l'état fondu un mélange I comprenant une composition II qui contient :
a) au moins un pigment III, à raison de 1% à 95% en poids, présentant une granulométrie comprise entre 5 nm et 20 µm et choisi dans le groupe formé par une matière solide IIIa à inertie électrochimique, un composé IIIb qui est, lorsqu'il est chargé, apte à céder des ions de lithium et un composé IIIc qui est, lorsqu'il est chargé, apte à fixer des ions de lithium, et un mélange de la matière solide IIIa avec le composé IIIb ou avec le composé IIIc,
b) au moins un liant polymère IV à raison de 5% à 99% en poids, et
c) au moins un plastifiant V à raison de 0 à 200% en poids par rapport à la quantité totale des composants a) et b),
la proportion pondérale de la composition II dans le mélange I étant comprise entre 1% et 100% en poids et
étant exclus les mélanges I qui comprennent les compositions II contenant, en tant que liant polymère IV, un copolymère constitué de fluorure de vinylidène (FdV) et d'hexafluoropropylène (HFP) qui présente une teneur en HFP comprise entre 8% et 25% en poids et, en tant que plastifiant V, un composé choisi dans le groupe formé par le phtalate de bibutyle, le phtalate de diméthyle, le phtalate de diéthyle, le tris(butoxyéthyl)phosphate, le carbonate de propylène, le carbonate d'éthylène, le trimellitate de triméthyle et leurs mélanges.

2. Procédé selon la revendication 1, **caractérisé en ce que** le pigment II est une matière solide IIIa choisie dans le groupe formé par une matière solide inorganique, de préférence une matière solide inorganique basique, choisie dans le groupe formé par les oxydes, les oxydes mixtes, les silicates, les sulfates, les carbonates, les phosphates, les nitrures, les amides, les imides et les carbures des éléments appartenant aux groupes principaux I, II, III ou IV ou du groupe secondaire IV de la Classification Périodique des Eléments; un polymère choisi dans le groupe formé par le polyéthylène, le polypropylène, le polystyrène, le polytétrafluoroéthylène, le poly(fluorure de vinylidène); les polyamides; les polyimides; et une dispersion de matière solide contenant un polymère d'un tel type; et un mélange constitué de deux ou de plusieurs de ceux-ci.

3. Procédé selon la revendication 1 ou 2, **caractérisé en ce que** le pigment III est un composé IIIb qui, lorsqu'il est chargé, est apte à céder des ions lithium, choisi dans le groupe formé par LiCoO₂, LiNiO₂, LiNiₓCo_{y}O₂, LiNiₓCo_{y}Al_{Z}O₂ où 0<x,y,z£1, LiₓMnO₂ (O<x£1), LiₓMn₂O₄ (O<x£2), LiₓMoO₂ (O<x£2), LiₓMnO₃ (O<x£1), LiₓMnO₂ (O<x£2), LiₓMn₂O₄ (O<x£2), LiₓV₂O₄ (O<x£2,5), LiₓV₂O₃ (O<x£3,5), LiₓVO₂ (O<x£1), LiₓWO₂ (O<x£1), LiₓWO₃ (O<x£1), LiₓTiO₂ (O<x£1), LiₓTi₂O₄ (O<x£2), LiₓRuO₂ (O<x£1), LiₓFe₂O₃ (O<x£2), LiₓFe₃O₄ (O<x£2), LiₓCr₂O₃ (O<x£3), LiₓCr₃O₄ (O<x£3,8), LiₓV₃S₅ (O<x£1,8), LiₓTa₂S₂ (O<x£1), LiₓFeS (O<x£1), LiₓFeS₂ (O<x£1), LiₓNbS₂ (O<x£2,4), LiₓMoS₂ (O<x£3), LiₓTiS₂ (O<x£2), LiₓZrS₂ (O<x£2), LiₓNbSe₂ (O<x£3), LiₓVSe₂ (O<x£1), LiₓNiPS₂ (O<x£1,5), LiₓFePS₂ (O<x£1,5), LiNiₓB₁₋ₓO₂ (O < x < 1), LiNiₓAl₁₋ₓO₂ (O < x < 1), LiNiₓMg₁₋ₓO₂ (O < x < 1), LiNiₓCo₁₋ₓVO₄ (1 ≥ x ≥ 0), LiNiₓCo_{y}Mn_{z}O₂ (x+y+z = 1), LiFeO₂, LiCrTiO₄, LiₐM_{b}L_{c}O_{d} (1,15 ≥ a > 0; 1,3 ≥ b+c ≥ 0,8; 2,5 ≥ d ≥ 1,7; M = Ni, Co, Mn; L = Ti, Mn, Cu, Zn, métaux alcalino-terreux), LiCu_{X}^{II}Cu_{Y}^{III}Mn_{(2-(x+y))}O₄ (2 > x+y ≥ 0), LiCrTiO₄, LiGaₓMn₂₋ₓO₄ (0,1 ≥ x ≥ O), les polysulfures carboxyliques de structure générale : -[C(Sₓ)]ₙ-, V₂O₅, un mélange constitué de deux ou de plusieurs de ceux-ci, et un mélange constitué du composé IIIb et de la matière solide IIIa; et **en ce que** le mélange I contient en plus de la suie conductrice à raison de 0,1% à 20% en poids par rapport au mélange II.

4. Procédé selon la revendication 1 ou 2, **caractérisé en ce que** le pigment III est un composé IIIc qui, lorsqu'il est chargé, est apte à fixer des ions de lithium, choisi dans le groupe formé par le lithium, un alliage métallique contenant du lithium, la suie de carbone micronisée, le graphite naturel et synthétique, la poussière de charbon graphité synthétiquement, une fibre de carbone, l'oxyde de titane, l'oxyde de zinc, l'oxyde d'étain, l'oxyde de molybdène, l'oxyde de tungstène, le carbonate de titane, le carbonate de molybdène, le carbonate de zinc, LiₓM_{y}SiO_{z} (1 > x ≥ 0,1 > y ≥ 0, z > 0), Sn₂BPO₄, les polymères conjugués tels que par exemple les polypyrroles, les polyanilines, les polyacétylènes, les polyphénylènes, les composés métalliques du lithium LiₓM tels que par exemple les composés d'un tel type où M = Sn, Bi, Sb, Zn, Cd, Pb et 5 ≥ x ≥ 0; Li-Sn-Cd, CdO, PbO, un mélange constitué de deux ou de plusieurs de ceux-ci, et un mélange constitué du composé IIIc et de la matière solide IIIa; et **en ce que** le mélange I contient en plus de la suie conductrice à raison de jusqu'à 20% en poids par rapport au mélange II.

5. Procédé selon l'une quelconque des revendications 1 à 4, **caractérisé en ce que** l'on soumet à une réticulation le mélange I pendant ou après l'extrusion à l'état fondu.

6. Procédé selon l'une quelconque des revendications précédentes, **caractérisé en ce que** l'on soumet le mélange à une extrusion à l'état fondu dans un dispositif choisi dans le groupe formé par une extrudeuse de plastification à une vis, une extrudeuse à deux vis de type co-rotative, une extrudeuse à deux vis de type contrarotative, un malaxeur continu à deux arbres et une extrudeuse en continu à plusieurs arbres, et une combinaison de deux ou de plusieurs de ceux-ci.

7. Procédé de préparation d'un corps composé comprenant les étapes suivantes consistant à:
(I) préparer au moins une première couche par formulation et par extrusion à l'état fondu du mélange I tel que défini dans la revendication 1 et comprenant la composition II qui contient la matière solide IIIb ou la matière solide IIIc tels que définies dans les revendications 3 et 4;
(II) préparer au moins une deuxième couche par formulation et par extrusion du mélange I à l'état fondu tel que défini dans la revendication 1 et comprenant la composition II qui contient la matière solide IIIa tel que définie dans la revendication 2 et qui est exempte de la matière solide IIIb ou de la matière solide IIIc, et
(III) assembler, par la suite, la au moins une première couche et la au moins une deuxième couche par un procédé de revêtement classique.

8. Corps moulé, de préférence un corps moulé en forme de feuille, que l'on peut obtenir selon un procédé comprenant l'étape suivante consistant à:
I) formuler et extruder à l'état fondu un mélange I comprenant une composition II qui contient :
a) au moins un pigment III, à raison de 1% à 95% en poids, présentant une granulométrie comprise entre 5 nm et 20 µm et choisi dans le groupe formé par une matière solide IIIa à inertie électrochimique, un composé IIIb qui est, lorsqu'il est chargé, apte à céder des ions de lithium et un composé IIIc qui est, lorsqu'il est chargé, apte à fixer des ions de lithium, et un mélange de la matière solide IIIa avec le composé IIIb ou avec le composé IIIc,
b) au moins un liant polymère IV à raison de 5% à 99% en poids, et
c) au moins un plastifiant V à raison de 0 à 200% en poids par rapport à la quantité totale des composants a) et b),
la proportion pondérale de la composition II dans le mélange I étant comprise entre 1% et 100% en poids et
étant exclus les mélanges I qui comprennent les compositions II contenant, en tant que liant polymère IV, un copolymère constitué de fluorure de vinylidène (FdV) et de hexafluoropropylène (HFP) qui présente une teneur de HFP comprise entre 8% et 25% en poids et, en tant que plastifiant V, un composé choisi dans le groupe formé par le phtalate de dibutyle, le phtalate de diméthyle, le phtalate de diéthyle, le tris(butoxyéthyl)phosphate, le carbonate de propylène, le carbonate d'éthylène, le trimellitate de triméthyle et leurs mélanges.

9. Corps composé que l'on peut obtenir par un procédé comprenant les étapes suivantes consistant à :
(I) préparer au moins une première couche par formulation et par extrusion du mélange I à l'état fondu tel que défini dans la revendication 1 et comprenant la composition II qui contient la matière solide IIIb ou la matière solide IIIc telles que définies dans les revendications 3 et 4;
(II) préparer au moins une deuxième couche par formulation et par extrusion du mélange I à l'état fondu tel que défini dans la revendication 1 et comprenant la composition II qui contient la matière solide IIIa telle que définie dans la revendication 2 et qui est exempte de la matière solide IIIb ou de la matière solide IIIc, et
(III) assembler, par la suite, la au moins une première couche et la au moins une deuxième couche par un procédé de revêtement classique.

10. Mise en oeuvre d'un corps moulé selon la revendication 8, ou d'un corps moulé que l'on a préparé au moyen d'un procédé selon l'un quelconque des revendications 1 à 6, ou d'un corps composé selon la revendication 9, ou d'un corps composé que l'on a préparé au moyen d'un procédé selon la revendication 7, pour la préparation d'un électrolyte fixe, d'un séparateur, d'une électrode, dans un détecteur, une fenêtre électrochrome, un dispositif d'affichage, un condensateur ou une feuille conductrice d'ions.

11. Un séparateur, un électrolyte fixe, une électrode, un détecteur, une fenêtre électrochrome, un dispositif d'affichage, un condensateur ou une feuille conductrice d'ions comprenant un corps moulé selon la revendication 8 ou un corps moulé que l'on a préparé au moyen d'un procédé selon l'une quelconque des revendications 1 à 6 ou un corps composé selon la revendication 9 ou un corps composé que l'on a préparé au moyen d'un procédé selon la revendication 7.

12. Elément électrochimique contenant un séparateur, un électrolyte fixe ou une électrode selon la revendication 11 ou une combinaison de deux ou de plusieurs de ceux-ci.

13. Mise en oeuvre de l'élément électrochimique selon la revendication 12 en tant que batterie pour automobile, batterie portative ou batterie plate.
